# EUROPÄISCHE PATENTSCHRIFT

(11) **EP 2 690 335 B1**
(45) Veröffentlichungstag und Bekanntmachung des Hinweises auf die Patenterteilung: **31.08.2016**
(21) Anmeldenummer: 12178108.2
(22) Anmeldetag: 26.07.2012
(51) Int. Cl.: F16L 11/112, B29C 47/02, B29D 23/18, F02M 35/10, B29C 70/32, B29C 70/34, B29C 70/44, B29C 70/52, B29L 23/18, B29C 47/00, B29C 47/04, B29C 47/10, B29C 47/28, F16L 27/10, F16L 27/111, F16L 51/02

(54) **Flexibler schlauchförmiger Formkörper, wie Wellenbalg, und Verfahren zu dessen Herstellung**
Flexible, hose-shaped moulded body, such as bellows, and method for its manufacture
Corps moule tubulaire flexible, comme un soufflet, et son procédé de fabrication

(43) Veröffentlichungstag der Anmeldung: 29.01.2014
(73) Patentinhaber: Matzen, Ralph-Günther, 21337 Lüneburg (DE)
(72) Erfinder: Matzen, Ralph-Günther, 21337 Lüneburg (DE)
(74) Vertreter: RGTH

(56) Entgegenhaltungen:
- EP-A2- 1 013 979
- BE-A- 561 696
- DE-U1-202004 018 301
- US-A- 3 058 493
- US-A- 3 349 806
- US-A1- 2004 256 016

## Beschreibung

Die Erfindung betrifft einen flexiblen, schlauchförmigen Formkörper, wie Wellenbalg, für Luftansaugung, Turboaufladung, Kühlwasser- und Ölkreisläufe und Klimatisierung zur Anwendung im Fahrzeugbau, Schiffsbau, Maschinenbau und Flugzeugbau, wobei die umlaufende Wandfläche des Formkörpers ein Wellenprofil aufweist.

Derartige flexible, schlauchförmige Formkörper mit einem Wellenprofil sind bekannt.

Die US 3,058,493 A beschreibt einen flexiblen schlauchförmigen Formkörper mit einer ein Wellenprofil aufweisenden umlaufenden Wandfläche. Der Formkörper weist eine Festigkeitseinlage mit in Längsrichtung des Formkörpers verlaufenden Fäden, die in ein Neopren-Material eingebettet sind, auf, die das Druckkörperelement bilden. Die Herstellung erfolgt in der Weise, dass ein Rohlingsabschnitt durch Extrusion erhalten wird, bei dem sich längs erstreckende Fäden in ein Neopren-Material eingebettet werden. Dieser Rohlingsabschnitt wird über ein Pressdruckverfahren in eine gewellte Form gebracht.

Die in Längsrichtung verlaufenden Fäden sind gänzlich in das Bettungsmaterial eingebettet, jedoch nicht vollständig vom Bettungsmaterial bedeckt. Nach einer weiteren Ausführungsform sind diese Fäden so eingebettet, dass sie mit einem Abschnitt aus dem Bettungsmaterial herausragen. Der Formkörper weist ein Wellenprofil mit talförmigen bzw. eingezogenen Formkörperabschnitten und mit erhaben ausgebildeten Formkörperabschnitten auf. In den erhaben ausgebildeten Formkörperabschnitten des Wellenprofils sind schraubenförmige Verstärkungsdrähte angeordnet, die in das Bettungsmaterial mit eingebettet sind, so dass der Gesamtaufbau des Formkörpers derart ist, dass die Wandfläche des Formkörpers aus zwei Bettungsabschnitten besteht, nämlich einem Bettungsabschnitt mit in Längsrichtung verlaufenden Fäden und einem Bettungsabschnitt mit Verstärkungsdrähten, die ausschließlich in den erhaben ausgebildeten Formkörperabschnitten des Wellenprofils so angeordnet sind, dass sie in keiner Verbindung mit den in Formkörperlängsrichtung verlaufenden Fäden stehen. Es erfolgt keine Fixierung dieser Fäden vermittels der Verstärkungsdrähte. Diese Verstärkungsdrähte und die in Längsrichtung des Formkörpers verlaufenden Fäden bilden das Druckträgerelement des Formkörpers.

Die DE 20 2004 018 301 U1 offenbart einen flexiblen Schlauch, vorzugsweise Ladeluftschlauch, mit einer zumindest abschnittsweise ein elastomeres Material aufweisenden Wandung, in der ein Druckträger angeordnet ist, der wenigstens ein im Wesentlichen faden- oder drahtförmiges Druckträgerelement aufweist. Das Druckträgerelement ist in die Matrix der Wandung eingebettet und, zumindest in Abschnitten des Druckträgerelementes, gegenüber der Matrix der Wandung beweglich. Mit dieser Ausbildung soll ein flexibler Schlauch mit einer größeren Lebensdauer gegenüber bekannten Schläuchen geschaffen werden.

Der der EP 1 013 979 B1 zu entnehmende Schlauch, z. B. ein Ladeluftschlauch, weist ein mindestens eine Gewebeeinlage umfassendes Druckträgerelement auf, das von einem vulkanisierbaren Material umgeben ist. Der Schlauch weist weiterhin endseitig eine umlaufende Nut auf. Die Gewebeeinlage ist von einem silikonhaltigen Material ummantelt, wobei der Schlauch endseitig jeweils eine vorgeformte Muffe aufweist, die eine Prägung in Form der umlaufenden Nut aufweist. Durch die Verwendung eines Gewebes anstelle eine Gestricks soll eine Druckfestigkeit erreicht werden, die wesentlich über der liegen soll, die mit den bisher bekannten Schläuchen erzielbar ist. Durch die spezielle Ausgestaltung des Schlauches soll ein einfacher Einbau bei der Motormontage erreicht werden.

Der US 3 349 806 A ist ein gewellter Formkörper mit sich in Längsrichtung erstreckenden und in großen Abständen voneinander angeordneten Fäden, die in ein Elastomer-Material eingebettet sind, zu entnehmen. Jeder der in Längsrichtung verlaufenden Fäden besteht auch zwei Einzelfäden, die miteinander unter Ausbildung von Öffnungen verdrillt sind, wobei durch die Öffnungen der sich gegenüberliegenden, in Längsrichtung verlaufenden aus jeweils zwei miteinander verdrillten Einzelfäden bestehenden Fäden quer zu diesen verlaufenden Fäden geführt sind. Nach einer weiteren Ausführungsform sind durch die Öffnungen der in Längsrichtung verlaufenden Fäden helixartig gewundene Fäden geführt. Da die in Längsrichtung verlaufenden Fäden voneinander in großen Abständen angeordnet sind, besteht die Möglichkeit, dass es durch plötzlich örtlich auftretende Druckerhöhungen im Innenraum des Formkörpers zu Ausstülpungen in der Wandfläche kommen kann, die zu einer Beschädigung der Wandfläche führen können.

Die US 2004/256016 A1 beschreibt einen gewellten Formkörper, nämlich einen Kühlmittelförderschlauch, mit sich in Längsrichtung erstreckenden Fäden, die in ein Elastomer-Material eingebettet sind, und die die Kettfäden eines für die Herstellung des Formkörpers verwendeten Gewebezuschnittes bilden. Die umlaufende Wandfläche des Formkörpers ist mehrschichtig ausgebildet und besteht aus mehreren ineinander geschobenen Einzelschläuchen, die mit Verstärkungsschichten versehen sind, wobei der jeweils außenliegende Einzelschlauch eine innenseitig liegende Gummischicht und eine außenseitig liegende Gummischicht als äußere Deckschicht aufweist.

Des Weiteren weist der schlauchförmige Formkörper einen schlauchförmigen Gewebekörper auf, dessen Gewebe aus Schuss- und Kettfäden besteht. Dieser Gewebekörper ist in ein Bettungsmaterial eingebettet und bildet das Druckkörperelement für den Formkörper.

Nach der BE 561696 A ist ein ein Wellenprofil aufweisender Schlauch bekannt, dessen Wandfläche aus in ein Kautschukmaterial eingebetteten Fäden besteht, die zur Längsachse des Schlauches von dessen einem Ende schräg verlaufend sind. Eine weitere Ausführungsform sieht einen Schlauch vor, dessen Wandfläche zwei übereinander liegende Schichten aus Fäden aufweist, wobei die Fäden der ersten Schicht zur Längsachse des Schlauchs von dessen einem Ende zum anderen Ende schräg verlaufend sind, während die Fäden der zweiten Schicht unter Kreuzung der Fäden der ersten Schicht in entgegen gesetzter Richtung vom einen Ende des Schlauches zu dessen anderem Ende verlaufend sind, um einen Schlauch mit hervorragender Reißfestigkeit zu erhalten.

Es ist Aufgabe der Erfindung unter Vermeidung eines Gewebes oder Gestricks als Druckträgerelement einen flexiblen, schlauchförmigen Formkörper mit einem Wellenprofil mit einer hohen Flexibilität, einer hohen Elastizität und einer hohen Druckfestigkeit zu schaffen.

Die Erfindung geht von einem flexiblen, schlauchförmigen Formkörper gemäß der eingangs genannten Art aus.

Die Aufgabe wird erfindungsgemäß gelöst durch einen flexiblen schlauchförmigen Formkörper mit einer, ein Wellenprofil aufweisenden Wandfläche, wie Wellenbalg, in der Weise, dass die umlaufende Wandfläche des Formkörpers aus mehreren Festigkeitsträgereinlagen besteht, die derart übereinanderliegend angeordnet sind, dass die in Längsrichtung des Formkörpers verlaufenden Fäden oder Fasern oder Cord-Fäden der jeweils obersten Festigkeitsträgereinlage über den Fäden oder Fasern oder den Cord-Fäden der jeweils darunter liegenden Festigkeitsträgereinlage zu liegen kommen oder dass die in Längsrichtung des Formkörpers verlaufenden Fäden oder Fasern oder Cord-Fäden der jeweils obersten Festigkeitsträgereinlage über den Fäden oder Fasern oder den Cord-Fäden idealerweise versetzt angeordnet sind, so dass die Fäden oder Fasern oder Cord-Fäden der jeweils obersten Festigkeitsträgereinlage oberhalb der Zwischenräume idealerweise zwischen den Fäden oder Fasern oder Cord-Fäden der jeweils darunter liegenden Festigkeitsträgereinlage zu liegen kommen, wobei jede Festigkeitsträgereinlage aus den in Längsrichtung des Formkörpers verlaufenden Fäden oder Fasern oder Cord-Fäden mit einer hohen Reißfestigkeit, optional mit zusätzlichen, umlaufenden helixartig gewickelten Zusatzfäden als

Druckträgerelement, und aus quer oder diagonal zu den in Längsrichtung verlaufenden Fäden oder Fasern oder Cord-Fäden verlaufenden und die Fäden oder Fasern oder Cord-Fäden in Stellung und in Abstand haltenden und bevorzugterweise in größeren Abständen angeordneten Fixierfäden mit einer gegenüber der Stärke der Fäden, Fasern/Cord-Fäden geringeren Stärke besteht, wobei die Fixierfäden nach Art von Kettfäden eines aus Schuss- und Kettfäden bestehenden Gewebes um und über die Fäden oder Fasern oder die Cord-Fäden geführt sind und in das vulkanisierbare Material oder in das Elastomer oder in das Thermoplast eingebettet sind, und wobei der Formkörper ein Wellenprofil mit talförmigen bzw. eingezogenen Formkörperabschnitten und mit erhaben ausgebildeten Formkörperabschnitten aufweist, wobei in den talförmigen Formkörperabschnitten Ringkörper aus einem metallischen Material oder aus einem eine große Härte aufweisenden Kunststoff zur Erhaltung der Wellenkontur unter Innendruck und zur Erhöhung der Druckfestigkeit angeordnet sind.

Besonders vorteilhaft bei der erfindungsgemäßen Ausgestaltung ist die Verwendung von Cord-Fäden als Druckträgerelement und insbesondere von Cord-Fäden mit einer hohen Reißfestigkeit, die in Formkörperlängsrichtung verlaufend und in das vulkanisierbare Material, oder in ein Elastomer oder in ein Thermoplast eingebettet sind und die von eine geringe Stärke und eine geringe Festigkeit aufweisenden Fixierfäden während der Einbettung in Stellung gehalten werden. Diese aus den in Längsrichtung des Formkörpers verlaufenden Cord-Fäden bestehende Festigkeitsträgereinlage bildet das Druckträgerelement des flexiblen Schlauches bzw. des schlauchförmigen Wellenbalges. Neben Cord-Fäden, Fäden oder Fasern, aus Kunstoffen wie Polyamid, Polyester, Polyvenylchlorid, Polypropylen, Polyethylen, Polyaramiden usw. können auch andere Materialien wie Naturfasern, Glas-, Keramik-, Kohle- oder Metallfasern, eingesetzt werden, auch in Kombination (Hybride), die möglichst eine hohe Reißfestigkeit aufweisen sollten. Dadurch, dass die Festigkeitsträgereinlage ausschließlich aus in Schlauchlängsrichtung verlaufenden Cord-Fäden oder andersartig verlaufenden Fäden oder Fasern und nicht aus einem aus Schuss- und Kettfäden bestehenden Gewebe oder einem Gestrick besteht, wird neben einer hohen Druckfestigkeit eine hohe Elastizität erhalten, die die flexible Verbinderfunktion des schlauchförmigen Formkörpers bzw. des Wellenbalges auch unter Einfluß von Innendruck und Bewegungseintrag aus allen möglichen Richtungen und Winkelstellungen ermöglicht. Des Weiteren wird eine hohe Druckfestigkeit durch die Anordnung von Ringkörpern aus einem metallischen Material oder aus einem harten Kunststoffmaterial in den jeweils eingezogenen Abschnitten des Wellenbalges erreicht.

Weitere vorteilhafte Ausgestaltungen der Erfindung sind Gegenstand der Unteransprüche.

So besteht das Bettungsmaterial für die in Längsrichtung verlaufenden Fäden oder Fasern, wie für die Cord-Fäden und für die Fixierfäden, aus einem formfesten, gummielastischen Elastomer (Naturkautschuk, Synthesekautschuk, Silikonkautschuk). Des Weiteren besteht das Bettungsmaterial vorteilhafterweise aus einem Thermoplast, wie Polyethylen, Polypropylen, Polyvinylchlorid, Polystyrol oder Polyamid.

Die in Längsrichtung verlaufenden Fäden oder Fasern, wie die Cord-Fäden, weisen gegenüber den Fixierfäden eine größere Stärke auf, da die Fixierfäden nicht Gegenstand des Druckkörpers sind. Die Fixierfäden weisen auch keine hohe Reißfestigkeit auf.

Die die in Längsrichtung verlaufenden Fäden oder Fasern, wie die Cord-Fäden, der Festigkeitsträgereinlage in Abstand und in Stellung haltenden Fixierfäden sind nach Art von Kettfäden eines aus Schuss- und Kettfäden bestehenden Gewebes um und über die Fäden oder Fasern, insbesondere über die Cord-Fäden, geführt, wobei sie nicht den klassischen Zweck von Schußfäden erfüllen. Die Anordnung der Fixierfäden erfolgt bevorzugterweise in größeren Abständen, da sie ausschließlich die Aufgabe haben, die Cord-Fäden in ihren Anordnungen zu fixieren.

Der schlauchförmige Formkörper erhält seine wellenförmige Form zur Ausbildung eines Wellenbalges vermittels eines Formwerkzeuges, bestehend aus einem inneren Kernwerkzeug, um das eine Pressbandage, Pressfolie oder nur Überdruck oberhalb des zu formenden Wandungsmaterials appliziert wird, oder aus einem oberen/äußeren, heb- und senkbaren Werkzeug und einem unteren/inneren feststehenden oder heb-/zu öffnenden und senkbaren Werkzeug, wobei das obere/äußere Werkzeug und das untere/innere Werkzeug mit der der Form des herzustellenden Formkörpers entsprechenden formgebenden Flächen derart ausgebildet sind, dass sich die formgebenden Flächen zu der Form des herzustellenden wellenförmigen Formkörpers ergänzen.

Eine weitere Ausgestaltung des Formkörpers besteht darin, dass in der umlaufenden Wandfläche des Formkörpers eine Festigkeitsträgereinlage aus in Längsrichtung des Formkörpers verlaufenden Fäden oder Fasern, wie Cord-Fäden, und aus quer verlaufenden Fixierfäden angeordnet ist, wobei die Fäden oder Fasern oder Cord-Fäden und die Fixierfäden in das Thermoplast eingebettet sind. Die Festigkeitsträgereinlage weist nur in Längsrichtung zum Formkörper verlaufende Fäden oder Fasern oder Cord-Fäden auf.

Erfindungsgemäß ist vorgesehen, dass in der umlaufenden Wandfläche des Formkörpers mehrere Festigkeitsträgereinlagen aus in Längsrichtung des Formkörpers verlaufenden Fäden oder Fasern, wie Cord-Fäden, und aus quer oder diagonal verlaufenden Fixierfäden vorgesehen sind, wobei die Festigkeitsträgereinlagen derart übereinanderliegend angeordnet sind, dass die in Längsrichtung des Formkörpers verlaufenden Fäden oder Fasern, wie Cord-Fäden, der jeweils obersten Festigkeitsträgereinlage über den Fäden oder Fasern, insbesondere Cord-Fäden, der jeweils darunter liegenden Festigkeitsträgereinlage zu liegen kommen oder dass die in Längsrichtung des Formkörpers verlaufenden Fäden oder Fasern, wie Cord-Fäden, der jeweils obersten Festigkeitsträgereinlage über den Fäden oder Fasern, wie Cord-Fäden, versetzt angeordnet sind, so dass die Fäden oder Fasern,

wie Cord-Fäden, der jeweils obersten Festigkeitsträgereinlage oberhalb der Zwischenräume möglichst zwischen den Fäden oder Fasern, wie Cord-Fäden, der jeweils darunter liegenden Festigkeitsträgereinlage zu liegen kommen.

Diese Ausführungsformen tragen zu einer wesentlichen Erhöhung der Reißfestigkeit bei vergleichbar geringer und homogener Wandstärke bei. Hinzu kommt, dass derartig ausgebildete schlauchförmige Formkörper bzw. Wellenbälge auch für hohe Drücke geeignet sind. Insbesondere die hier eingelegten Cord-Fäden verleihen dem schlauchförmigen Formkörper bzw. dem Wellenbalg eine hohe Festigkeit bei gleichzeitiger Beibehaltung einer ausreichenden Elastizität und Beweglichkeit.

Das erfindungsgemäße Verfahren zur Herstellung des flexiblen, schlauchförmigen Formkörpers umfasst folgende Schritte:
a) Herstellen eines Flächengebildes durch Einbettung mehrerer übereinanderliegender Festigkeitsträgereinlagen aus in Längsrichtung zur Achse eines zylindrischen Kernwerkzeuges mit einem außenseitig aufweisenden Wellenprofil parallel zueinander und in einem Abstand voneinander verlaufenden Fäden oder Fasern, auch Cord-Fäden mit einer hohen Reißfestigkeit, optional mit zusätzlichen, umlaufenden helixartig gewickelten zusätzlichen und aus quer oder diagonal zu den in Längsrichtung verlaufenden Fäden oder Fasern oder Cord-Fäden diese in Stellung haltenden Fixierfäden in ein vulkanisierbares Material oder in ein Elastomer oder in ein Thermoplast;
b) Bildung einer Rolle aus dem in Schritt a) hergestellten Flächengebilde;
c) Aufwickeln eines vom aufgerollten Flächengebilde abgetrennten Abschnittes auf ein außenwandseitig ein Wellenprofil aufweisendes, zylindrisches oder hohlzylindrisches Kernwerkzeug;
d) Einwirken einer Pressbandage, Pressfolie oder Außendruckes (Autoclave) oder des oberen/äußeren Werkzeuges und des unteren/inneren Werkzeuges eines Formwerkzeuges mit einer Ober-/Außenform mit einer der Form des herzustellenden Formkörpers mit dem Wellenprofil und mit einer Unter-/Innenform mit einer der Form des herzustellenden Formkörpers mit einem Wellenprofil, wobei sich die Formen der Ober-/Außenform und der Unter-/Innenform zur Wellenform des Formkörpers ergänzen auf den auf dem zylindrischen Kernwerkzeug angeordneten Abschnitt des Flächengebildes zur Ausbildung des Wellenbalges; gegebenenfalls und/oder
   d1) Einwirken einer Pressbandage, Pressfolie, Überdrucks (Autoclave), herabfahrbare Anpressrollen oder auch Rundprofile, die auf vor dem Auffahren der Pressbandage, Pressfolie etc. aufgesteckt werden, um die Formgebung zu verbessern; und/oder
   d2) Expansion durch Innenbedruckung des Formlings/Rohlings mittels Ballon (Blatter) oder durch direkte Luft oder Dampfeinblasung anstelle des Kernwerkzeuges an die Innenkontur des geschlossenen Ober-/Unterwerkzeuges
e) Entfernen des zylindrischen Innenwerkzeuges, bzw. der Werkzeughälften zur Freigabe des Wellenbalges;
f) Einsetzen von Ringkörpern aus einem metallischen Material in die im Wellenbalg ausgebildeten Wellentäler.

Nach einer weiteren Ausführungsform werden Festigkeitsträgereinlagen eingesetzt, die ausschließlich in das Bettungsmaterial eingebettete, in Längsrichtung zum Formkörper verlaufende Fäden oder Fasern oder Cord-Fäden aufweisen, wobei die Anordnung der Festigkeitsträgereinlagen mehrlagig ist.

Ein weiteres Verfahren zur Herstellung eines flexiblen, schlauchförmigen Formkörpers umfasst folgende Schritte:
a) Herstellen eines Flächengebildes durch Einbettung mehrerer übereinander liegender Festigkeitsträgereinlagen aus in Längsrichtung zur Achse eines zylindrischen Kernwerkzeugs mit einem außenseitig aufweisenden Wellenprofil parallel zueinander und in einem Abstand voneinander verlaufenden Fäden oder Fasern,auch Cord-Fäden, und/oder zusätzlichen, umlaufenden helixartig gewickelten zusätzlichen und aus quer oder diagonal zu den in Längsrichtung verlaufenden Fäden oder Fasern oder Cord-Fäden diese in Stellung haltenden Fixierfäden in ein vulkanisierbares Material oder in ein Elastomer oder in ein Thermoplast, wobei ein Abschnitt des Flächengebildes auf ein außenwandseitig ein Wellenprofil aufweisendes zylindrisches oder hohlzylindrisches Kernwerkzeug aufgebracht und vermittels einem Formwerkzeuges oder Pressbandage, Pressfolie oder Überdrucks (Autoclave) zu einem Wellenbalg verformt wird, oder
a1) Herstellen eines schlauchförmigen und strangartigen Formkörpers aus mehreren übereinanderliegend angeordneten, in ein vulkanisierbares Material oder in ein Elastomer oder in ein Thermoplast eingebetteten Festigkeitsträgereinlagen aus in Längsrichtung des Stranges und in einem Abstand voneinander verlaufenden Fäden oder Fasern, auch Cord-Fäden, und/oder zusätzlichen umlaufenden helixartig aufgewickelten Zusatzfäden, und aus quer oder diagonal zu den in Längsrichtung verlaufenden Fäden oder Fasern oder Cord-Fäden diese in Stellung haltenden Fixierfäden im Extrusionsverfahren, und
   Formgebung des Wellenprofiles einzelner Strangabschnitte mittels Aufschub auf entsprechend ausgebildete Formwerkzeuge oder Formschläuche zur Herstellung von einzelnen Wellenbälgen.

Neben den Herstellungsverfahren für den Wellenbalg, nach dem von einem streifenförmigen Flächengebilde aus in ein Thermoplast eingebetteten Fäden oder Fasern oder Cord-Fäden als Druckträgerelement und diese im Stellung haltenden Fixierfäden, ausgegangen wird, wobei einzelne Abschnitte des Flächengebildes dann zu einem Wellenbalg verformt werden, besteht ein weiteres Herstellungsverfahren darin, dass vermittels einer Extrusionsanlage hergestellte schlauch- und strangförmige Abschnitte eines Rohlings zu einzelnen Wellenbälgen verformt werden.

Dieses Verfahren zur Herstellung eines flexiblen, schlauchförmigen Formkörpers mit einer Wandfläche mit einem Wellenprofil, wie Wellenbalg, zur Luftansaugung, Turboaufladung, Kühlwasser- und Ölkreisläufe und Klimatisierung zur Anwendung im Fahrzeugbau, Schiffsbau, Maschinenbau und Flugzeugbau, mit mindestens einer in ein vulkanisierbares Material, in ein Elastomer oder in ein Thermoplast eingebetteten Festigkeitsträgereinlage unter Verwendung einer Extrusionsanlage, umfassend einen ersten Extruder, eine Zuführungsvorrichtung für die Fäden oder für die Cord-Fäden, eine Vorrichtung zur Fixierung der Fäden oder der Cord-Fäden, gegebenenfalls eine Vorrichtung für das Aufbringen von Flyerfäden (helixartige Umlaufwicklung), einen zweiten Extruder und eine Vorrichtung zum Ablängen einzelner Abschnitte eines strangförmigen Endlos-Rohlings zu einzelnen Rohlingsabschnitten, umfasst folgende Schritte:
a) Herstellen eines strangförmigen, schlauchförmigen Formkörpers mit einer umlaufenden Wand mit einem Wellenprofil, vermittels einer Extrusionsanlage für Elastomere oder Thermoplaste durch Formung eines strangförmigen, schlauchförmigen Rohlings vermittels eines ersten Extruders;
b) Zuführung von in Längsrichtung des strangförmigen Rohlings verlaufenden Fäden oder Cord-Fäden zu deren Ablage auf der Oberfläche des Rohlings;
   b1) Zuführung der längsliegenden Fäden, Fasern, Cord-Fäden, ggf. deren Lage und Abstand mit leichten Querfäden fixiert, als Flachmaterial durch strinseitigen Einzug in einen Doppel-T-CoExtruder, wobei der flachliegende Festigkeitsträger innerhalb des CoExtruders oberhalb der ersten Extrusion an der Außenoberfläche dieser Innenseele rund geformt wird und dann durch den zweiten Extrudermund mit einer Decklage überspritzt wird;
c) Fixierung der auf dem strangförmigen Rohling abgelegten Fäden oder Cord-Fäden vermittels zugeführter Fixierfäden (Helix-Flyer); (nicht im Falle von b1))
d) Aufbringen einer weiteren Schicht eines Elastomers oderThermoplasts vermittels eines zweiten Extruders auf den im Schritt c) hergestellten strangförmigen Rohling;
e) beliebige Wiederholung der Schritte a), b), ba), c) und d) zur Erzeugung mehrerer Lagen mit Festigkeitsträgern;
f) Ablängen einzelner Rohling-Abschnitte von den in Schritt d) hergestellten Rohling, gegebenenfalls;
   f1) Einwirken einer Pressbandage, Pressfolie, Überdrucks (Autoclave), herabfahrbare Anpressrollen, oder auch Rundprofile, die auf von dem Auffahren der Pressbandage, Pressfolie etc. aufgesteckt werden, um die Formgebung zu verbessern
   f2) Expansion durch Innenbedruckung des Formlings/Rohling mittels Ballon (Blatter) oder durch direkte Luft- oder Dampfeinblasung anstelle des Kernwerkzeuges an die Innenkontur des geschlossenen Ober-/Unterwerkzeugs
g) Verformung der einzelnen im Schritt e) erhaltenen Rohling-Abschnitte zu einem Wellenbalg unter Verwendung eines das Wellenprofil erzeugenden Formwerkzeuges mit einer Ober-/Außenform mit einer der Form des herzustellenden Formkörpers mit dem Wellenprofil entsprechenden Form und mit einer der Form des herzustellenden Formkörpers entsprechenden Unter-/Innenform mit dem Wellenprofil entsprechenden Form, wobei sich die Formen der Oberform und der Unterform zur Wellenform des Formkörpers ergänzen oder aber die Formgebung durch Außendruck mittels Pressbandage, Pressfolie oder Überddruck (Autoclav) erfolgt.

Nach verschiedenen Verfahren lassen sich flexible, schlauchförmige Formkörper herstellen. Geschaffen werden Formkörper, deren umlaufende Wandflächen mit einem Wellenprofil ausgebildet sind. Beide Ausführungsformen weisen mindestens eine Festigkeitsträgereinlage aus in Formkörperlängsrichtung parallel zueinander verlaufenden Fäden oder Fasern oder Cord-Fäden und aus quer oder längs verlaufenden Fäden oder Fasern oder Cord-Fäden verlaufenden, diese Fäden in Stellung
haltenden, Fixierfäden auf, die in ein Elastomer oder Thermoplast eingebettet sind.

Zusätzlich zwischengelegte Gewirke als weitere Festigkeitsträger erhöhen ggf. die Gesamtfestigkeit.

Eine weitere Ausführungsform der Erfindung betrifft ein Verfahren zur Herstellung eines flexiblen, schlauchförmigen Formkörpers mit einer Wandfläche mit einem Wellenprofil, wie Wellenbalg, Formschlauch, Formbögen zur Luftansaugung, Turboaufladung, Kühlwasser- und Ölkreisläufe und Klimatisierung zur Anwendung im Fahrzeugbau, Schiffsbau, Maschinenbau und Flugzeugbau, mit mindestens einer in ein vulkanisierbares Material, in ein Elastomer oder in ein Thermoplast eingebetteten Festigkeitsträgereinlage unter Verwendung einer Extrusionsanlage, umfassend einen T-CoExtruder, mit stirnseitiger Zuführung für die Fäden oder für die Cord-Fäden als bahnförmiges Flachmaterial, welches oberhalb der ersten Extrusionseele im Extruderkopf über diese erste Seele herum rund geformt wird und folgend durch die zweite Extruderdüse umspritzt wird. Diese Anlage alleinstehen, entweder abschließend gefolgt von einer Ablängvorrichtung oder zur Erstellung weiterer Lagen von Festigkeitsträgern gefolgt von eine Zuführungsvorrichtung für die Fäden oder für die Cord-Fäden gefolgt von einer Vorrichtung zur Fixierung der Fäden oder der Cord-Fäden, gegebenenfalls eine Vorrichtung für das Aufbringen von Flyerfäden, einen zweiten Extruder und eine Vorrichtung zum Ablängen einzelner Abschnitte eines strangförmigen Endlos-Rohlings zu einzelnen Rohlingsabschnitten, umfassend folgende Schritte:
a) Herstellen eines strangförmigen, schlauchförmigen Formkörpers mit einer umlaufenden Wand mit einem Wellenprofil, vermittels einer Extrusionsanlage durch Formung eines strangförmigen, schlauchförmigen Rohlings vermittels eines ersten Extruders;
b) Zuführung von in Längsrichtung des strangförmigen Rohlings verlaufenden Fäden oder Cord-Fäden zu deren Ablage auf der Oberfläche des Rohlings;
c) Fixierung der auf dem strangförmigen Rohling abgelegten Fäden oder Cord-Fäden vermittels zugeführter Fixierfäden;
d) Aufbringen einer oder mehrerer weiterer Schicht(en) eines Elastomers oder Thermoplasts vermittels eines zweiten oder weiteren Extruders auf den im Schritt c) hergestellten strangförmigen Rohling;
e) Ablängen einzelner Rohling-Abschnitte von den in Schritt d) hergestellten Rohling;
f) Verformung der einzelnen im Schritt e) erhaltenen Rohling-Abschnitte zu einem Wellenbalg unter Verwendung eines das Wellenprofil erzeugenden Formwerkzeuges mit einer Oberform mit einer der Form des herzustellenden Formkörpers mit einer dem Wellenprofil entsprechenden Form und mit einer Unterform mit einer der Form des herzustellenden Formkörpers mit dem Wellenprofil entsprechenden Form, wobei sich die Formen der Oberform und der Unterform zur Wellenform des Formkörpers ergänzen; und/oder
   f1) Einwirken einer Pressbandage, Pressfolie, Überdrucks (Autoclav), herabfahrbare Anpressrollen, oder auch Rundprofile, die auf vor dem Auffahren der Pressbandage, Pressfolie etc. aufgesteckt werden, um die Formgebung zu verbessern
   f2) Expansion durch Innenbedruckung des Formlings/Rohlings mittels Ballon (Blatter) oder durch direkte Luft oder Dampfeinblasung anstelle des Kernwerkzeugs an die Innenkontur des geschlossenen Ober-/Unterwerkzeugs

Ausführungsbeispiele des Erfindungsgegenstandes sind in der Zeichnung beispielsweise dargestellt und zwar zeigt:
- Fig. 1: in einer schaubildlichen Ansicht einen Wellenbalg;
- Fig. 2: eine Draufsicht auf eine Gewebeeinlage aus in Längsrichtung verlaufenden Cord-Fäden mit quer zu diesen verlaufenden, die Cord-Fäden in Stellung haltenden Fixierfäden;
- Fig. 3: in einer schaubildlichen Ansicht eines als Rollenmaterial vorbereiteten Innenliners;
- Fig. 4: in einer schaubildlichen Ansicht einen Abschnitt des Innenliners vor dem Anbringen auf ein, ein Wellenprofil aufweisendes, zylindrisches Kernwerkzeug;
- Fig. 5: in einer schaubildlichen Ansicht das zylindrische Kernwerkzeug mit einer ein Wellenprofil aufweisenden Oberfläche mit aufgebrachtem Innenliner;
- Fig. 6: in einer schaubildlichen Ansicht eine aufgerollte Festigkeitsträgereinlage aus Cord-Fäden und Fixierfäden;
- Fig. 7: in einer schaubildlichen Ansicht einen Abschnitt der Festigkeitsträgereinlage vor dem Aufbringen auf das mit dem Innenliner versehene zylindrische Kernwerkzeug;
- Fig. 8: in einer schaubildlichen Ansicht das zylindrische Kernwerkzeug mit aufgebrachtem Innenliner und mit aufgebrachter Festigkeitsträgereinlage;
- Fig. 9: in einer vergrößerten schaubildlichen Ansicht ein Detail des Aufbaus der Lagen auf dem zylindrischen Kernwerkzeug in Längsrichtung der Mittelachse verlaufende Cord-Fäden;
- Fig. 10: in einer schaubildlichen Ansicht den auf dem zylindrischen Kernwerkzeug ausgeformten Wellenbalg mit dem das Wellenprofil erzeugenden Formwerkzeug in geöffneter Stellung;
- Fig. 11: in einer schaubildlichen Ansicht das Kernwerkzeug mit dem Wellenbalg vor der Entformung;
- Fig. 12: in einer schaubildlichen Ansicht den Wellenbalg nach der Entformung;
- Fig. 13: in einer schaubildlichen Ansicht den fertig konfektionierten Wellenbalg;
- Fig. 14: in einer schaubildlichen Ansicht ein mit einem Wellenprofil versehenes Kernwerkzeug und einen zylindrischen Rohling aus bestehend aus dem vollständig vorgefertigtem Wandungsaufbau, mit mindesten einer Festigkeitsträgereinlage mit in Längsrichtung verlaufenden Cord-Fäden und Fixierfäden;
- Fig. 15: in einer schaubildlichen Ansicht den auf das Kernwerkzeug aufgeschobenen Rohling;
- Fig. 16: in einer schaubildlichen Ansicht den Wellenbalg nach der Weiterverarbeitung vor der Entformung;
- Fig. 17: in einer schaubildlichen Ansicht den Wellenbalg nach der Entformung;
- Fig. 18: in einer schaubildlichen Ansicht den fertig konfektionierten Wellenbalg;
- Fig. 19: in einer schaubildlichen Ansicht einen Abschnitt des schlauchförmigen Formkörpers mit einer Festigkeitsträgereinlage mit in Achslängsrichtung verlaufenden Cord-Fäden;
- Fig. 20: in einer vergrößerten Ansicht einen Wandabschnitt des schlauchförmigen Formkörpers mit den in ein Elastomer oder Thermoplast eingebetteten Cord-Fäden;
- Fig. 21: in einer vergrößerten schaubildlichen Ansicht eines Wandabschnittes des schlauchförmigen Formkörpers mit einer Reihe von nebeneinander liegenden Cord-Fäden;
- Fig. 22: in einer schaubildlichen Ansicht einen Abschnitt des schlauchförmigen Formkörpers mit einer Festigkeitsträgereinlage mit in Längsrichtung von zwei Reihen von Fixierfäden in Stellung gehaltenen Cord-Fäden;
- Fig. 23: in einer vergrößerten Ansicht einen Wandabschnitt des schlauchförmigen Formkörpers mit den in einer Reihe angeordneten Cord-Fäden;
- Fig. 24: in einer vergrößerten schaubildlichen Ansicht einen Wandabschnitt des Formkörpers mit einer Reihe von in ein Elastomer oder Thermoplast eingebetteten und von zwei Reihen von Fixierfäden in Stellung gehaltenen Cord-Fäden;
- Fig. 25: in einer schaubildlichen Ansicht einen Abschnitt des schlauchförmigen Formkörpers mit zwei übereinander liegend angeordneten Festigkeitsträgereinlagen mit in Achslängsrichtung verlaufenden Cord-Fäden;
- Fig. 26: in einer vergrößerten Ansicht einen Wandabschnitt des schlauchförmigen Formkörpers mit den Cord-Fäden der beiden übereinander liegend angeordneten Festigkeitsträgereinlagen;
- Fig. 27: in einer vergrößerten schaubildlichen Ansicht eines Wandabschnittes des schlauchförmigen Formkörpers mit zwei übereinanderliegenden Reihen von in ein Elastomer oder Thermoplast eingebetteten Cord-Fäden;
- Fig. 28: in einer schaubildlichen Ansicht einen Abschnitt des schlauchförmigen Formkörpers mit zwei übereinander liegend angeordneten Festigkeitsträgereinlagen mit in Achslängsrichtung verlaufenden, von Fixierfäden in Stellung gehaltenen Cord-Fäden;
- Fig. 29: in einer vergrößerten Ansicht einen Wandabschnitt des schlauchförmigen Formkörpers mit den Cord-Fäden der beiden übereinander liegend angeordneten Festigkeitsträgereinlagen;
- Fig. 30: in einer vergrößerten, schaubildlichen Ansicht eines Wandabschnittes des schlauchförmigen Formkörpers mit zwei übereinander liegenden Reihen von in ein Elastomer oder Thermoplast eingebetteten und von Fixierfäden in Stellung gehaltenen Cord-Fäden;
- Fig. 31: in einer schaubildlichen Ansicht ein von der Rolle abgezogener und einlagig mit/ohne Überdeckung auf ein zylindrisches, mit einem Wellenprofil versehenes Kernwerkzeug gewickelter Innenliner;
- Fig. 32: in einer schaubildlichen Ansicht ein mit einem Wellenprofil versehenes zylindrisches Kernwerkzeug;
- Fig. 33: in einer schaubildlichen Ansicht das zylindrische Kernwerkzeug gemäß Fig. 31 mit teilweise aufgewickeltem Abschnitt eines Innenliner-Streifens;
- Fig. 34: in einer schaubildlichen Ansicht ein von der Rolle abgezogener mit Elastomer oder Thermoplast vorbeschichteter Festigkeitsträger und einlagig mit/ohne Überdeckung auf das zylindrische Kernwerkzeug aufgewickelten Festigkeitsträger;
- Fig. 35: in einer schaubildlichen Ansicht das zylindrische Kernwerkzeug gemäß Fig. 31 mit aufgewickeltem Abschnitt eines Innenliner-Streifens;
- Fig. 36: in einer schaubildlichen Ansicht das zylindrische Kernwerkzeug mit aufgewickeltem Innenliner und mit teilweise aufgewickelter Fertigkeitsträgereinlage;
- Fig. 37: in einer schaubildlichen Ansicht das zylindrische, mit einem Wellenprofil versehene Kernwerkzeug und den vorgefertigten Rohling vor dem Aufschieben auf das Kernwerkzeug;
- Fig. 38: ein Detail des Lagenaufbaus des Rohlings;
- Fig. 39: in einer schaubildlichen Ansicht das zylindrische Kernwerkzeug mit aufgeschobenem Rohling;
- Fig. 40: in einer schaubildlichen Ansicht das zylindrische Kernwerkzeug mit aufgeschobenem Rohling mit einer Reihe von in Achslängsrichtung verlaufenden Cord-Fäden;
- Fig. 41: ein Detail des Lagenaufbaus des Rohlings;
- Fig. 42: in einer schaubildlichen Ansicht den auf das zylindrische Kernwerkzeug aufgeschobenen Rohling in Verbindung mit einer auf den Umfang des Kernwerkzeugs aufgesetzten Profilrolle zur Ausbildung des Wellenprofils und des Wellenbalges;
- Fig. 43: in einer schaubildlichen Ansicht den auf dem zylindrischen Kernwerkzeug teilweise ausgeformten Wellenbalg mit den das Wellenprofil erzeugenden Rollen;
- Fig. 44: in einer schaubildlichen Ansicht eine weitere Ausführungsform einer Profilrolle mit sich fast über die ganze Länge des Rohlings erstreckender Welle;
- Fig. 45: in einer schaubildlichen Ansicht ein zylindrisches Kernwerkzeug mit aufgeschobenem Rohling und mit aufgesetzten elastischen Ringen zur Fixierung der Außenkontur;
- Fig. 46: in einer schaubildlichen Ansicht den auf dem zylindrischen Kernwerkzeug ausgeformten Wellenbalg mit der das Wellenprofil erzeugenden zulaufenden Pressbandage bei gleichzeitiger Fixierung der Kontur vor der Vulkanisierung;
- Fig. 47: in einer schaubildlichen Ansicht den auf dem zylindrischen Kernwerkzeug angeordneten und ausgebildeten Wellenbalg nach der Vulkanisierung mit entfernter Pressbandage und mit Konturringen vor dem Beschnitt;
- Fig. 48: in einer schaubildlichen Ansicht den beschnittenen Wellenbalg;
- Fig. 49: in einer schaubildlichen Ansicht den Wellenbalg nach der Entformung;
- Fig. 50: in einer schaubildlichen Ansicht den fertigen Wellenbalg, konfektioniert mit Stütz- und V-Flansch-Ringen;
- Fig. 51: in einer schaubildlichen Ansicht den fertigen Wellenbalg, konfektioniert mit Stützringen aber glatten Enden (Muffen);
- Fig. 52: in einer Seitenansicht eine Extrusionsanlage zur Herstellung von strangförmigen Formkörper-Rohlingen mit einem ersten Extruder, einer Vorrichtung zur Zuführung der Cord-Fäden, einer Vorrichtung zur Fadenfixierung, einem zweiten Extruder und einer Vorrichtung zum Ablängen der Rohlinge;
- Fig. 53: in einer schaubildlichen Ansicht eine Extrusionsanlage zur Herstellung von Formkörper-Rohlingen mit einem ersten Extruder, einer Vorrichtung zur Zuführung der Cord-Fäden, einer Vorrichtung zur Fadenfixierung, einem zweiten Extruder und einer Vorrichtung zum Ablängen der Rohlinge;
- Fig. 54: einen Wandabschnitt eines mit der Extrusionsanlage hergestellten Rohlings mit einem Innenliner und mit einer Reihe von in ein Elastomer oder Thermoplast eingebetteten Cord-Fäden;
- Fig. 55: in einer Seitenansicht eine Extrusionsanlage zur Herstellung von strangförmigen Formkörperrohlingen mit einem ersten Extruder, einer Vorrichtung zum Zuführen von Cord-Fäden, einer Vorrichtung zur Fadenfixierung, einer Vorrichtung zum Anbringen von Flyerfäden, einem zweiten Extruder und einer Vorrichtung zum Ablängen der Rohlinge;
- Fig. 56: in einer schaubildlichen Ansicht eine Extrusionsanlage zur Herstellung von Formkörperrohlingen mit einem ersten Extruder, einer Vorrichtung zum Zuführen von Cord-Fäden, einer Vorrichtung zur Fadenfixierung, einer Vorrichtung zum Anbringen von Flyerfäden, einem zweiten Extruder und einer Vorrichtung zum Ablängen der Rohlinge;
- Fig. 57: einen Wandabschnitt eines mit der Extrusionsanlage hergestellten Rohlings mit einem Innenliner und mit einer Reihe von in ein Elastomer oder Thermoplast eingebetteten Cord-Fäden
- Fig. 58: eine Seitenansicht einer T-Co-Extrusionsanlage mit einem T-Co-Extruder, einer Vorrichtung zur stirnseitigen Zuführung einer Lage Flachbahn von Cord-Fäden und einer Vorrichtung zum Ablängen von Rohlingsabschnitten vom Endlos-Rohling;
- Fig. 59: eine schaubildliche Ansicht der T-Co-Extrusionsanlage gemäß Fig. 58;
- Fig. 60: eine vergrößerte Ansicht eines Abschnittes des Rohlings mit einem Detail seines Lagenaufbaus;
- Fig. 61: eine Seitenansicht einer T-Co-Extrusionsanlage mit einem T-Co-Extruder, einem weiteren Extruder einer Vorrichtung zum Anbringen von Flyerfäden und einer Vorrichtung zum Ablängen von Rohlings-Abschnitten vom Endlos-Rohling;
- Fig. 62: eine schaubildliche Ansicht der T-Co-Extrusionsanlage gemäß Fig. 61.

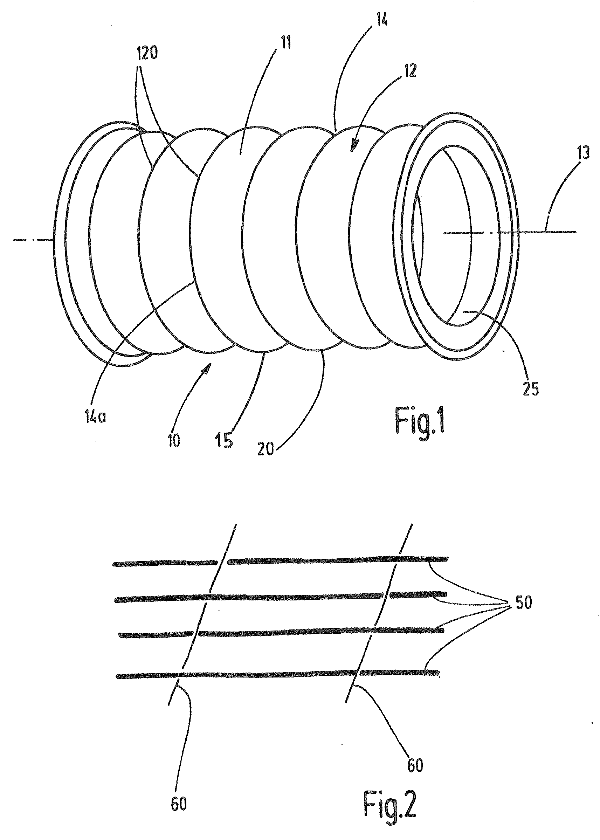

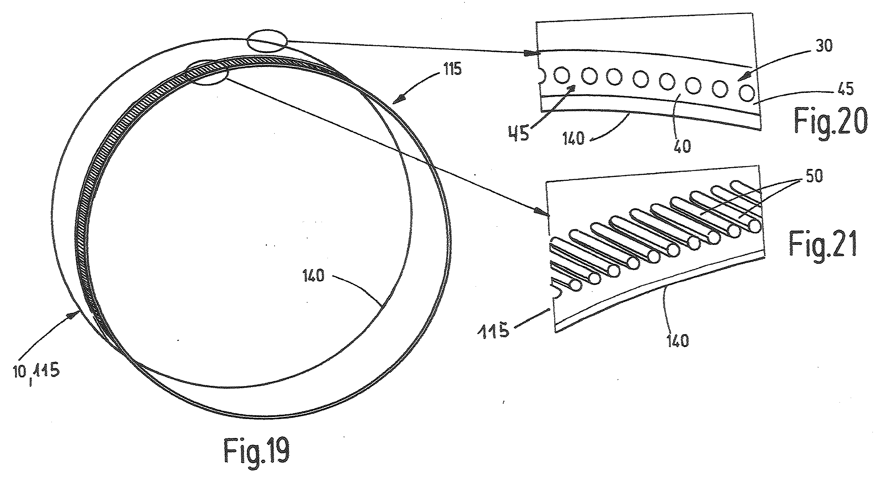

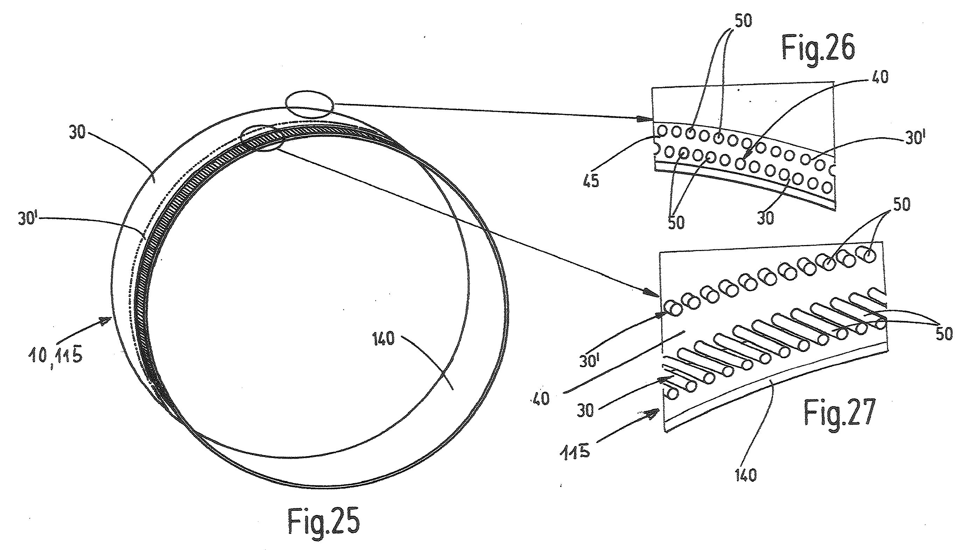

Figur 1 zeigt ein Ausführungsbeispiel der Erfindung. Der flexible schlauchförmige Formkörper 10 ist als Wellenbalg 20 ausgebildet. Seine umlaufende Wandfläche 11 weist ein Wellenprofil 12 mit eingezogenen Wellentälern 14a und mit erhaben ausgebildeten Formkörperabschnitten 15 auf; die Längsachse des Wellenbalges 20 ist mit 13 bezeichnet. Innenwandseitig ist ein Innenliner 140 aus einem Kunststoff, aus einem Elastomer oder Thermoplast vorgesehen. Die umlaufende Wandfläche 11 des Wellenbalges 20 wird von mindestens einer in ein vulkanisierbares Material oder in ein Elastomer oder in ein Thermoplast 40 eingebetteten Festigkeitsträgereinlage 30 (Fig. 20, 21 und 23, 24) oder von mehreren übereinander liegend angeordneten Festigkeitsträgereinlagen 30, 30' gebildet (Fig. 26, 27 und 29, 30).

Jede Festigkeitsträgereinlage 30, 30a besteht aus in Längsrichtung des Formkörpers 10 verlaufenden Fäden oder Fasern, insbesondere Cord-Fäden 50, wobei vorteilhafter Weise Fäden, Fasern, auch sog. Cord-Fäden 50 mit einer hohen Reißfestigkeit zum Einsatz kommen.

Die Cord-Fäden 50 der Festigkeitsträgereinlage 30 bilden das Druckträgerelement. Es können Kunststoff-Fäden, Fäden aus Metall, Glas, Keramik, Kohlefaser und Naturfasern zur Herstellung des Druckträgerelementes eingesetzt werden. Die in Reihe nebeneinander und im Abstand voneinander liegenden Cord-Fäden 50 sind in ein Elastomer oder Thermoplast 40 eingebettet. Auch andersartig ausgebildetes Bettungsmaterial 45 kann eingesetzt werden. Wie Figur 21 zeigt, sind die in Reihe angeordneten Cord-Fäden 50 nicht miteinander verbunden.

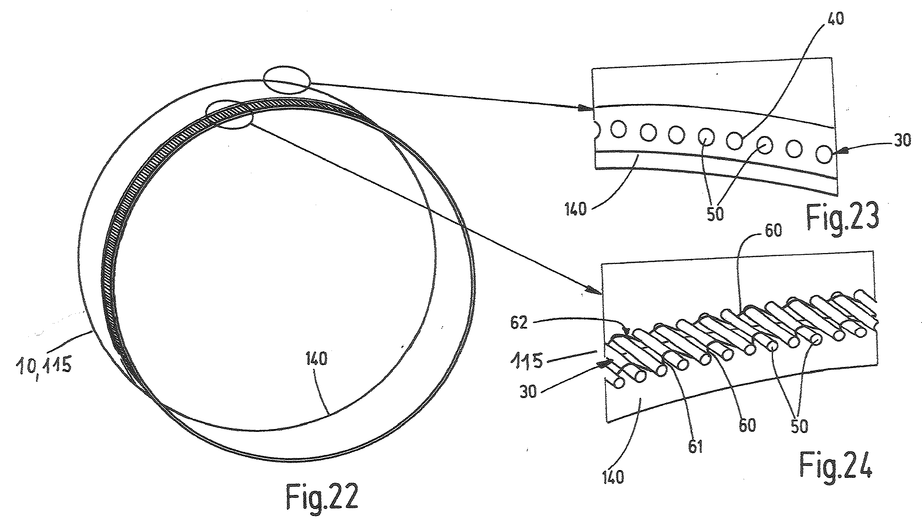

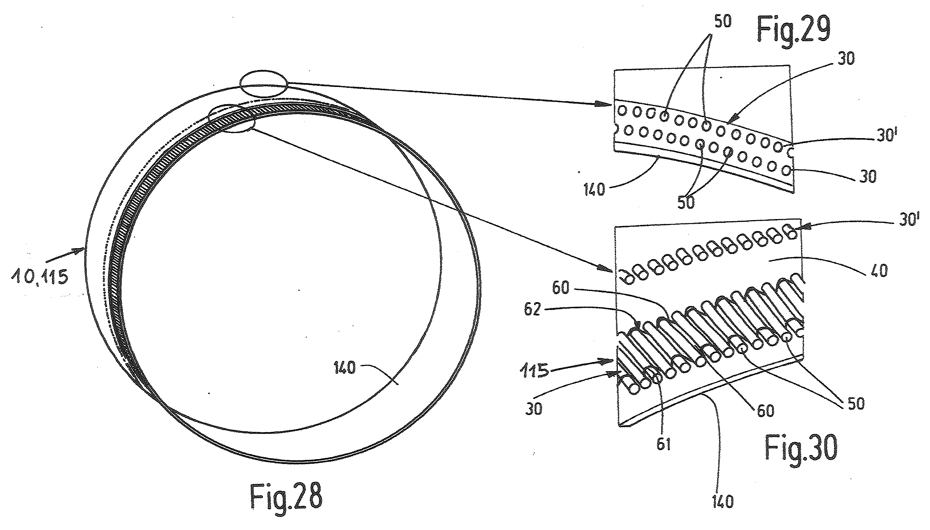

Nach einer weiteren Ausführungsform werden die Cord-Fäden 50 vermittels Fixierfäden 60 in Stellung gehalten, die zusammen mit den Cord-Fäden 50 in ein Thermoplast eingebettet sind (Fig. 24 und 30). Danach besteht die Festigkeitsträgereinlage 30 aus in Längsrichtung verlaufenden Cord-Fäden 50 und aus quer oder diagonal zu diesen verlaufenden Fixierfäden 60, die aus Kunststoff oder Naturfasern bestehen und keine hohe Reißfestigkeit aufweisen, da nur die Cord-Fäden 50 das Druckträgerelement bilden.

Die in Längsrichtung verlaufenden Fäden oder Fasern oder Cord-Fäden 50 werden in Abstand und in Stellung von den Fixierfäden 60 gehalten. Die Fixierfäden 60 sind nach Art von Kettfäden eines aus Schuss- und Kettfäden bestehenden Gewebes um und über die Fäden oder Fasern oder Cord-Fäden 50 geführt (Fig. 2). Die Fixierfäden 60 sind in mehreren Reihen angeordnet (Fig. 24 und 30). Die Führung der Fixierfäden 60 der einzelnen Reihen 61, 62 sind in der Weise über die Cord-Fäden geführt, dass bei einer ersten Reihe 61 die Fixierfäden 60 über die Cord-Fäden 50 geführt sind, wohingegen bei der jeweils nachfolgenden Reihe 62 eine Führung der Fixierflächen 60 über die Cord-Fäden 50 in der Weise erfolgt, dass die Führungsbereiche zueinander versetzt sind, wie dies den Fig. 24 und 30 zu entnehmen ist.

Die Fixierfäden 60 der beiden Reihen 61, 62 sind über und unter die Cord-Fäden 50 derart geführt, dass die die Cord-Fäden 50 übergreifenden Abschnitte der Fixierfäden 60 der beiden Reihen 61, 62 zueinander versetzt sind, wie dies die Figuren 24 und 30 zeigen. Dies setzt sich über die Breite des Festigkeitsträgerflachmaterials abwechselnd fort.

Da es ausschließlich Aufgabe der Fixierfäden 60 ist, die Cord-Fäden 50 in Abstand und in Stellung zu halten, weisen die Fixierfäden 60 eine geringe Stärke gegenüber der Stärke der Cord-Fäden 50 auf (Fig. 24 und 30).

Wird die Wand 11 des Formkörpers 10 von mehreren Festigkeitsträgereinlagen 30, 30' gebildet, dann sind die Festigkeitsträgereinlagen derart übereinanderliegend angeordnet, dass die in Längsrichtung des Formkörpers verlaufenden Fäden oder Fasern oder Cord-Fäden 50 der jeweils obersten Festigkeitsträgereinlage 30 über den Fäden oder Fasern oder Cord-Fäden 50 der jeweils darunter liegenden Festigkeitsträgereinlage 30' zu liegen kommen (Fig. 26, 27 und 29, 30).

Nach einer weiteren Ausführungsform sind die in Längsrichtung des Formkörpers 10 verlaufenden Fäden oder Fasern oder Cord-Fäden 50 der jeweils obersten Festigkeitsträgereinlagen 30 unter den Fäden oder Fasern oder Cord-Fäden 50 der jeweils untersten Festigkeitsträgereinlage 30' versetzt angeordnet, so dass die Fäden oder Fasern oder Cord-Fäden 50 der jeweils obersten Festigkeitsträgereinlage 30 idealerweise oberhalb der Zwischenräume zwischen den Fäden oder den Fasern oder den Cord-Fäden 50 der jeweils darunter liegenden Festigkeitsträgereinlage 30' zu liegen kommen.

Zur Erhöhung der Festigkeit das Wellenbalges 20 sind in den talförmigen Formkörperabschnitten Ringkörper 70, 120 aus einem metallischen Material oder aus einem eine große Härte aufweisenden Kunststoff angeordnet (Fig. 1, 13 und 18).

Die Aufgabe der Ringkörper 70 besteht darin, dass Aufdehnungen von Wandkörperabschnitten des Formkörpers durch Auftreten eines höheren Innendrucks unterbunden werden und damit neben der Druckfestigkeit vor allem die Formkontur (auch Wellen) erhalten bleibt und so die aufgabengemäße Flexibilität und Elastizität zur Bewegungsaufnahme auch unter Druck erhalten bleibt (Fig. 30).

Die gleiche Aufgabe, die die Ringkörper erfüllen, erfüllen die in das Material des Formkörpers 10 eingebetteten Zusatzfäden, die nach Art einer Helix gewickelt bzw. gewunden sind, die eine Kurve ist, die sich mit konstanter Steigung windet, wobei sie rechtsgängig oder linksgängig sein kann. Auch eine Fadenführung nach Art einer Doppel-Helix ist möglich.

Das Bettungsmaterial 45 (Fig. 20) für die Cord-Fäden 50 und für die Fixierfäden besteht aus einem formfesten gummielastischen Elastomer. Des Weiteren kann das Bettungsmaterial 45 aus einem Thermoplast, wie Polyethylen, Polypropylen, Polyvinylchlorid, Polystyrol oder Polyamid bestehen.

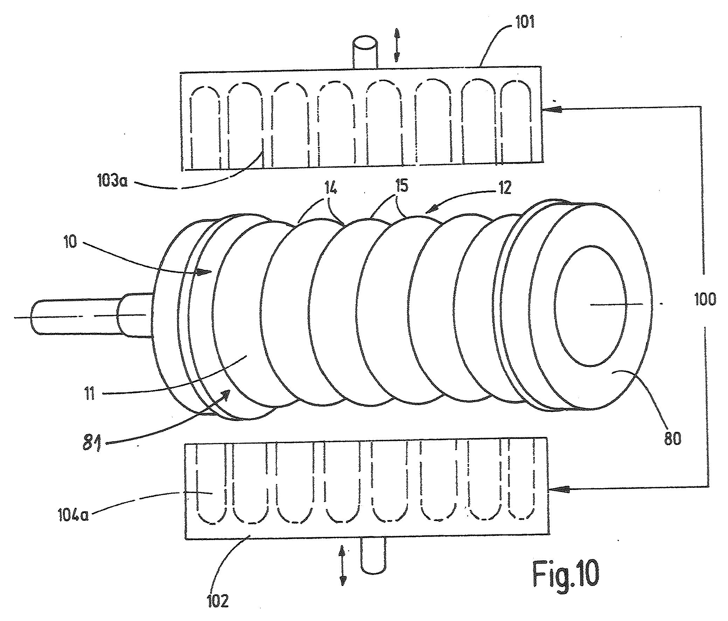

Der Formkörper 10 erhält seine wellenförmige Form zur Ausbildung des Wellenbalges 20 vermittels eines Formwerkzeuges 100 aus einem oberen heb- und senkbaren Werkzeug 101 und einem unteren feststehenden oder heb- und senkbaren Werkzeug 102, wobei das obere Werkzeug 101 und das untere Werkzeug 102 mit der der Form des herzustellenden Formkörpers 10 bzw. Wellenbalges 20 formgebende Flächen 103a, 104a derart ausgebildet sind, dass die formgebenden Flächen 103a, 104a zu der Form des herzustellenden wellenförmigen Formkörpers 10 bzw. Wellenbalges 20 ergänzen (Fig. 10). Bei dieser Ausführungsform wirkt ein zylindrisches Kernwerkzeug 80 mit auf seiner umlaufenden Wandfläche ausgebildetem Wellenprofil 81, so dass sich die formgebenden Flächen 103a, 104a, die ebenfalls wellenprofilartig ausgebildet sind, und das Wellenprofil 81 des zylindrischen Kernwerkzeuges 80, derart ergänzen, dass die Herstellung eines Wellenbalges 20 durchgeführt werden kann (Fig. 1 und 10). Anstelle des Kernwerkzeugs 80 kann auch ein innen bedruckter Ballon (Blatter) oder reiner eingeleiteter Innendruck (auch Dampf) treten mittels dessen der Rohling in die Form der beiden Außenwerkzeughälften gepresst und über die Vulkanisierdauer / Vernetzungszeit des Elastomers gehalten wird.

Die Fertigung eines Wellenbalges 20 erfolgt nach dem nachstehenden Ausführungsbeispiel wie folgt:

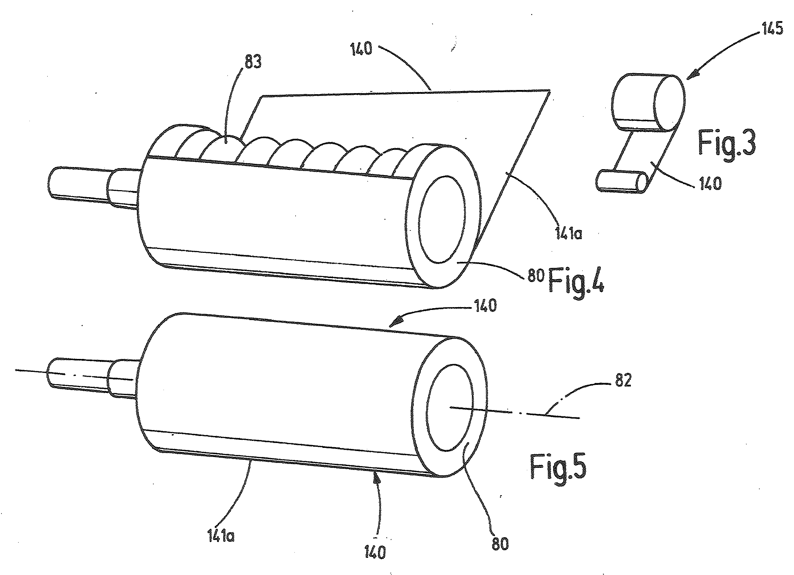

Es wird zunächst ein streifenförmiger Innenliner 140 aus einem Kunststoffmaterial hergestellt (Fig. 3). Der unter Ausbildung einer Rolle 145 aufgewickelte Innenliner-Streifen wird in einzelne Streifenabschnitte 141a zerteilt. Jeder Streifenabschnitt 141 weist eine Länge auf, die dem Umfang eines zylindrischen oder hohlzylindrischen Kernwerkzeuges 80 entspricht (Fig. 4). Dieser Streifenabschnitt 140a wird auf das zylindrische Kernwerkzeug 80 aufgewickelt (Fig. 5).

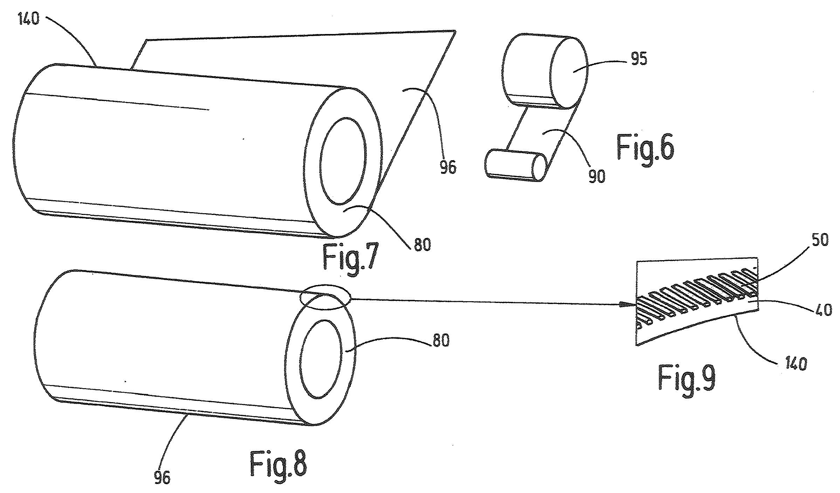

Als nächster Schritt wird ein Flächengebilde 90 durch Einbettung einer Festigkeitsträgereinlage 30 oder mehrerer Festigkeitsträgereinlagen 30, 30' aus in Längsrichtung zur Achse 82 des zylindrischen Kernwerkzeuges 80 mit einer ein Wellenprofil 83 aufweisenden Oberfläche parallel und in einem Abstand verlaufenden Cord-Fäden 50 und aus quer oder diagonal zu den in Längsrichtung verlaufenden Cord-Fäden 50 verlaufenden Fixierfäden 60 in ein Elastomer oder Thermoplast hergestellt. Dieses Flächengebilde wird in Streifenform hergestellt und zu einer Rolle aufgewickelt (Fig. 6). Danach wird ein Abschnitt 96 von streifenförmigen Flächengebilde 90 abgetrennt (Fig. 7). Die Länge des abgetrennten Abschnittes 96 entspricht der Oberfläche des zylindrischen Kernwerkzeuges 80. Anschließend wird dieser Abschnitt 96 auf das zylindrische Kernwerkzeug 80 aufgewickelt und kommt auf den Innenliner 140, der bereits auf dem Kernwerkzeug 80 angeordnet ist, zu liegen (Fig. 8). Ein Detail des Lagenaufbaus ist in Fig. 9 dargestellt.

Die Verformung der einen oder mehreren Festigkeitsträgereinlagen 30, 30' zusammen mit dem Innenliner 140 und den weiteren Elastomer- oder Thermoplasteinbettungen erfolgt dann mit dem Formwerkzeug 100 und zwar unter Ausbildung des Wellenprofils 12 (Fig. 10).

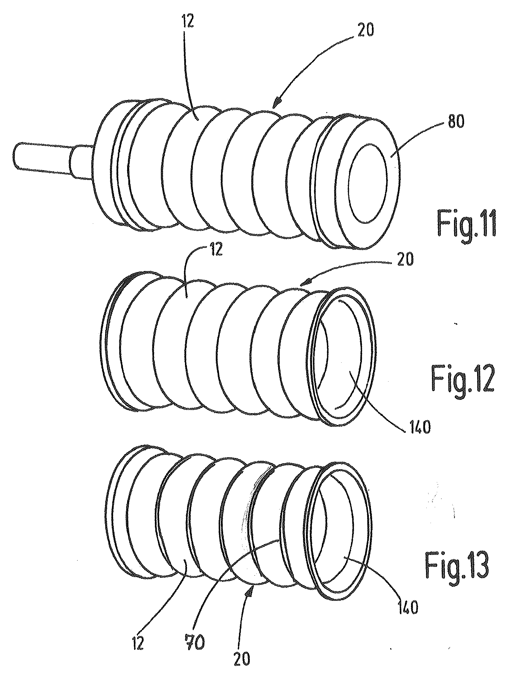

Die Fig. 11 zeigt das zylindrische Kernwerkzeug 80 und den Wellenbalg 20 mit dem Wellenprofil 12 vor der Entformung. Anschließend wird das zylindrische Kernwerkzeug 80 entfernt und der Wellenbalg 20 freigelegt (Fig. 12). Es erfolgt dann die Konfektionierung zum fertigen Wellenbalg 20 (Fig. 13).

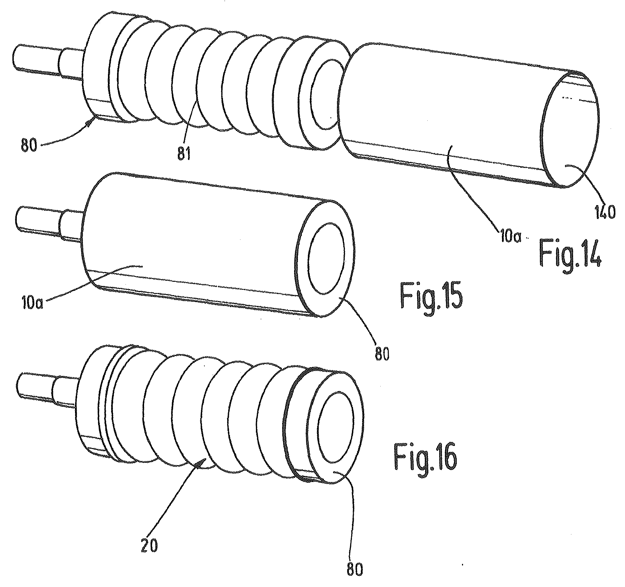

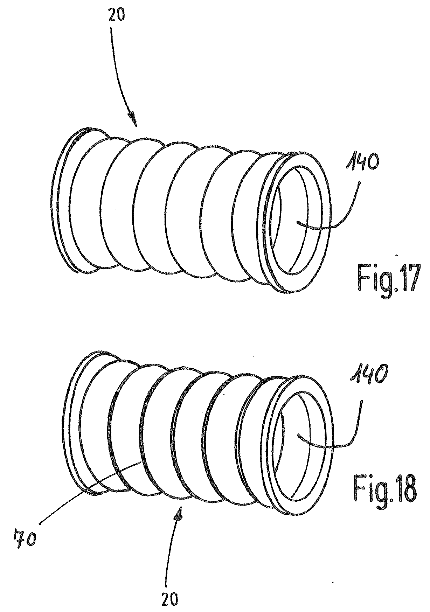

Eine weitere Fertigung eines Wellenbalges 20 ist in den Fig. 14 bis 16 dargestellt. Bei dieser Herstellungsweise wird von einem zylindrischen Rohling 10a ausgegangen, der aus einem Flächengebilde aus in einem Elastomer oder Thermoplast eingebetteten Cord-Fäden 50 und Fixierfäden 60 oder im Falle eines extrudierten Rohling aus aufgebrachten Längsfäden besteht und mit einem Innenliner 140 versehen sein kann. In diesen zylindrischen Rohling 10a wird dann ein zylindrisches Kernwerkzeug 80 mit einer ein Wellenprofil 81 ausgebildeten Oberfläche eingeschoben (Fig. 14). Der Rohling 10a sitzt passgenau auf dem zylindrischen Kernwerkzeug 80 (Fig. 15). Vermittels eines entsprechend ausgebildeten Formwerkzeuges 100 oder auch zulaufender Pressbandage, Pressfolie ggf. mit darunter eingelegten Rundprofilkörpern oder Überdruck (Autoclav) oder herabfahrbarer Konturrollen wird dann die Wellenprofil-Formgebung vorgenommen. Fig. 16 zeigt den geformten Wellenbalg 20 vor der Entformung. Das zylindrische Kernwerkzeug 80 wird dann entfernt und nach der erfolgten Entformung (Fig. 17) wird dann der fertig konfektionierte Wellenbalg 20 erhalten (Fig. 18).

Die Fig. 19, 20 und 21 zeigen den Aufbau eines Formkörpers 10. Dieser Formkörper besteht aus einer Festigkeitsträgereinlage 30, die neben einem Innenliner 140 eine Anzahl von in Längsrichtung verlaufenden Cord-Fäden 50 umfasst (Fig. 21). Diese Cord-Fäden sind nicht vermittels Fixierfäden 60 in Stellung gehalten, sondern in ein Elastomer oder Thermoplast 40 eingebettet (Fig. 19 und 20). Der Rohling 115 wurde durch Extrusion erhalten.

Der Aufbau des Rohlings 115 gemäß Fig. 22, 23 und 24 weist nur eine Festigkeitsträgereinlage 30 aus Cord-Fäden 50 auf, die über zwei Reihen von Fixierfäden 60 in Stellung gehalten werden. Die Fixierfäden 60 sind in zwei Reihen 61, 62 verlaufend angeordnet (Fig. 24). Diese Anordnung wiederholt sich in einem gewissen, dem Fixierungsgrad angemessenem. Die Cord-Fäden 50 und die Fixierfäden 60 sind eingebettet in ein Elastomer oder Thermoplast 40 Eine Ausführungsform eines Aufbaus ist in den Fig. 25, 26 und 27 dargestellt.

Der durch Extrusion erhaltene Rohling 115, aus dem der Wellenbalg 20 geformt wird, besteht auf zwei übereinander liegenden Festigkeitsträgereinlagen 30, 30', wobei jede Festigkeitsträgereinlage eine Reihe von Cord-Fäden 50 aufweist. Die Cord-Fäden 50 sind mit einem Elastomer oder Thermoplast 40 als Bettungsmaterial 45 eingebettet (Fig. 26, 27). Auch bei dieser Ausführungsform sind die Cord-Fäden 50 der beiden Festigkeitsträgereinlagen 30, 30' nicht über Fixierfäden 60 in Stellung gehalten.

Die Fig. 28, 29 und 30 zeigen einen weiteren Aufbau für einen Formkörper 10. Auch hier besteht die Wand des Rohlings 115 aus zwei Festigkeitsträgereinlagen 30, 30', wobei beide Festigkeitsträgereinlagen in Reihen angeordnete Cord-Fäden 50 aufweisen. Die Festigkeitsträgereinlage 30 weist Cord-Fäden 50 auf, die vermittels Fixierfäden 60 in Stellung gehalten werden. Die Anordnung der Fixierfäden 60 erfolgt dabei in zwei Reihen 61, 62, nämlich eine vordere Reihe 61 von Fixierfäden und eine rückwärtige Reihe 62 von Fixierfäden (Fig. 30). Diese Anordnung wiederholt sich in einem gewissen, dem Fixierungsgrad angemessenem Abstand. Die Cord-Fäden 50 und die Fixierfäden 60 der beiden Festigkeitsträgereinlagen 30, 30' sind in ein Elastomer oder Thermoplast 40 eingebettet. Auch dieser Rohling weist innenwandseitig einen Innenliner 140 auf.

Der Formkörper 10 erhält seine wellenförmige Form zur Ausbildung des Wellenbalges 20 durch eine zulaufende Pressbandage oder herabpressende, das Wellenprofil erzeugende Rollen oder das Wellenprofil erzeugende Profil-Rundkörper und die darüber zulaufende Pressbandage.

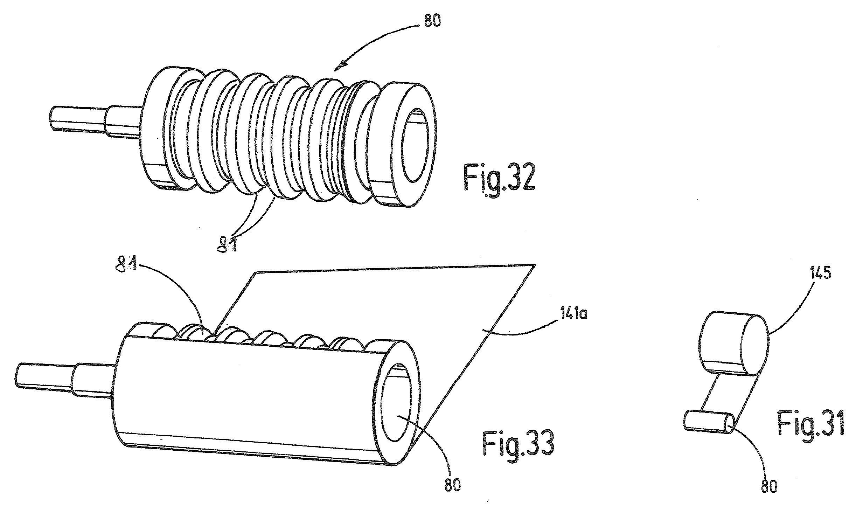

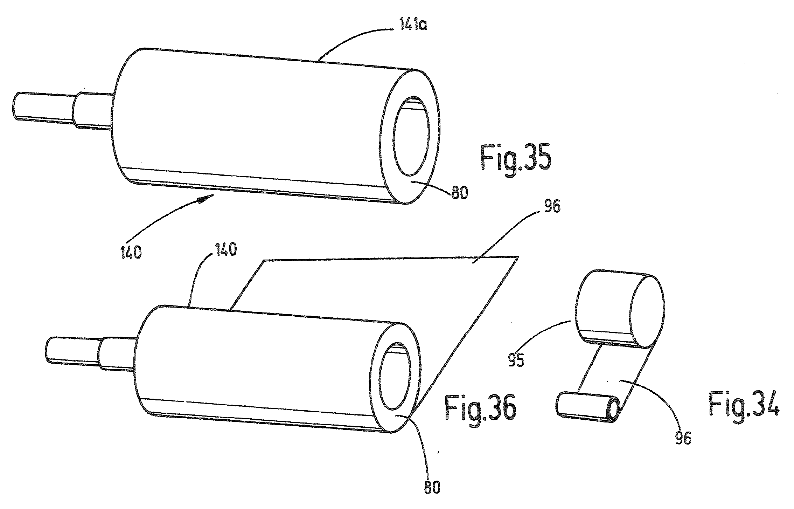

Eine Wellenbalg-Fertigung ist den Fig. 31, 32 und 33 zu entnehmen. Nach Fig. 31 wird von einer Rolle 145 ein später den Innenliner 140 bildender streifenförmiger Abschnitt 141a abgezogen und einlagig mit/ohne Überdeckung auf ein zylindrisches, mit einem Wellenprofil 12 versehenes Kernwerkzeug 80 gewickelt (Fig. 32 und 33). Der auf das Kernwerkzeug 80 aufgewickelte Abschnitt 141a bildet den Innenliner 140 (Fig. 35). Von der Rolle 95 wird ein Abschnitt 96 abgetrennt (Fig. 34). Dieser Abschnitt 96 bildet die Festigkeitsträgereinlage 30 und wird auf das den Innenliner 140 bereits aufweisende Kernwerkzeug 80 aufgelegt, wobei auch mehrere Festigkeitsträgereinlagen 30 nacheinander aufgelegt werden können. Die Cord-Fäden der Festigkeitsträgereinlage verlaufen in Längsrichtung des Kernwerkzeuges 80, das Kernwerkzeug 80 mit aufgewickeltem Innenliner 140 auf mit der teilweise aufgewickelten Festigkeitseinlage 30 ist in Fig. 36 dargestellt.

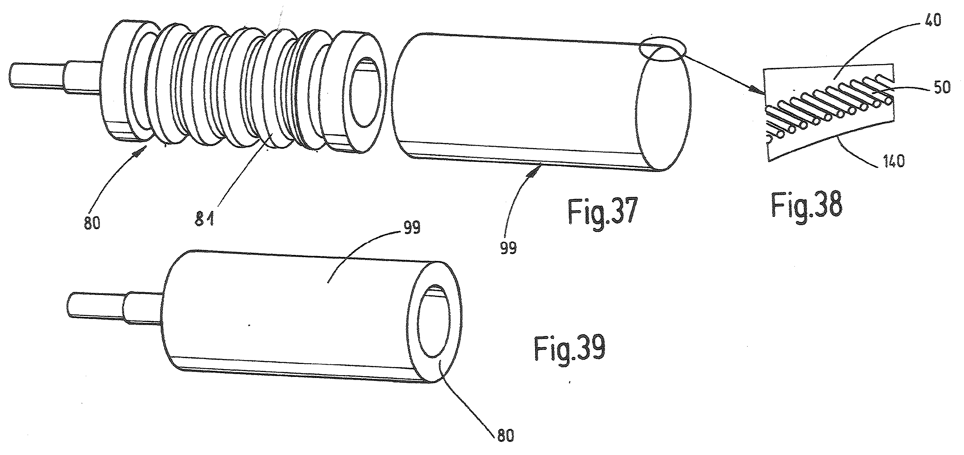

Der so vorbereitete Rohling 99 wird auf das zylindrische Kernwerkzeug 80 mit dem Wellenprofil 12 aufgeschoben. Der Lagenaufbau des Rohlings 99 ist in Fig. 38 dargestellt. Die Lage besteht aus einer Reihe von Cord-Fäden 50, die in einen Thermoplast 40 eingebettet sind. Diese Bettung mit den Cord-Fäden ist auf dem Innenliner 140 angeordnet (Fig. 38). Der Rohling wird auf das Kernwerkzeug 80 aufgeschoben (Fig. 39).

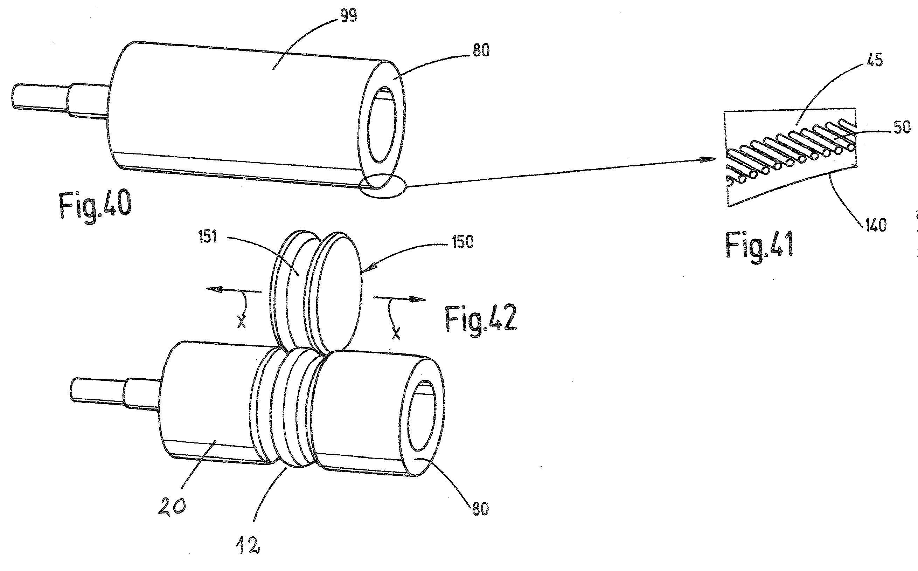

Der auf dem Kernwerkzeug 80 angeordnete Rohling 99 gemäß Fig. 40, mit dem in Fig. 41 wiedergegebenen Lagenaufbau (Fig. 41), erhält nunmehr sein Wellenprofil 12. Fig. 42 zeigt den auf das zylindrische Kernwerkzeug aufgeschobenen Rohling 99 in Verbindung mit einer auf den Umfang des Kernwerkzeugs aufgesetzten Profilrolle 150 mit einem Profil 151, das derart gestaltet ist, dass bei einem Einwirken auf die Oberfläche des Rohlings 99 im Zusammenwirken mit dem wellenförmigen Oberflächenprofil des Kernwerkzeugs 80 die Wandfläche des Rohlings 99 ein Wellenprofil 12 erhält. Damit ein Wellenprofil erhalten wird, das sich über die gesamte Länge des Rohlings 99 erstreckt, wird die Profilrolle 150 wechselweise in Pfeilrichtung x bewegt. Die Länge des Rohlings 99 entspricht der Länge des Kernwerkzeugs 80 (Fig. 42).

Die Länge der Profilrolle kann beliebig gewählt werden.

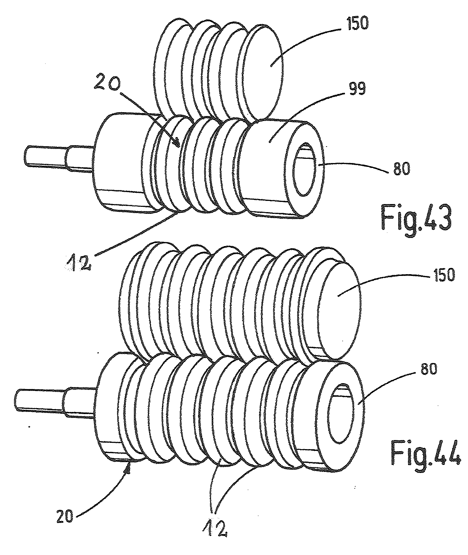

Fig. 43 zeigt den auf dem zylindrischen Kernwerkzeug 80 teilweise ausgeformten Wellenbalg 20 mit einer Profilrolle 150.

Eine weitere Ausführungsform einer Profilrolle 150 mit sich fast über die ganze Länge des Rohlings 99 erstreckender Welle zeigt Fig. 43. Es wird dabei auf dem Rohling ein Wellenprofil mit kurzer Länge erzeugt. Die Ausbildung eines sich über die ganze Länge des Rohlings 99 erstreckenden Wellenprofils 12 wird gemäß Fig. 44 mit einer entsprechend ausgebildeten Profilrolle 150 erreicht.

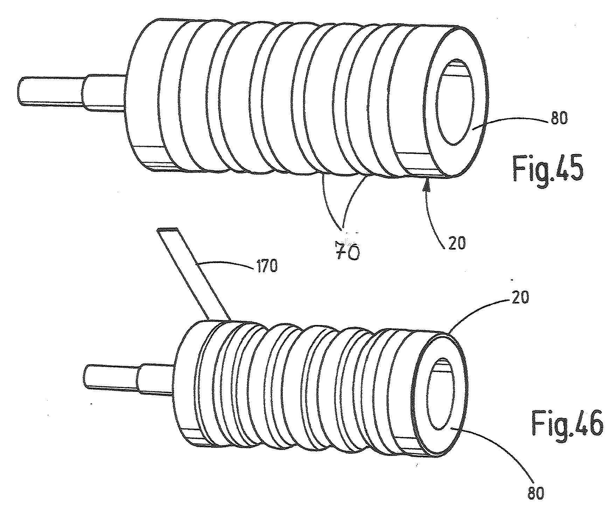

Bei der Ausführungsform eines Wellenbalges 20 gemäß Fig. 45 fixieren elastische Ringe 70 die Außenkontur des Wellenbalges 20.

Fig. 46 zeigt den auf dem zylindrischen Kernwerkzeug 80 ausgeformten Wellenbalg mit der das Wellenprofil 12 erzeugenden zulaufenden Pressbandage oder Pressfolie 170. Auf diese Weise wird die Kontur vor der Vulkanisierung mittels eines Presswickels oder Pressfolie fixiert.

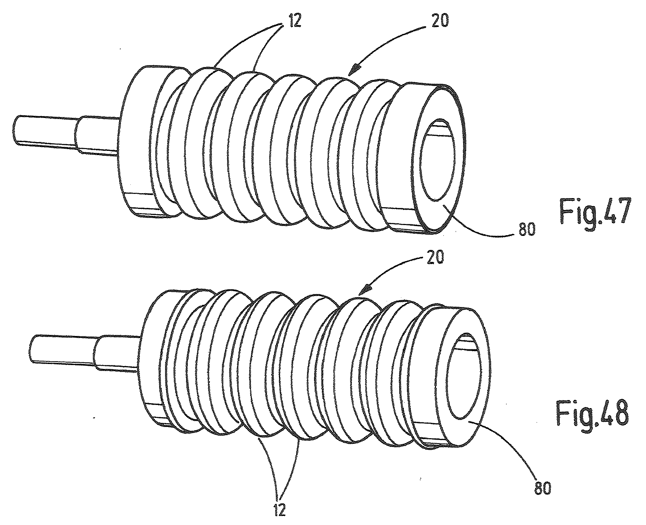

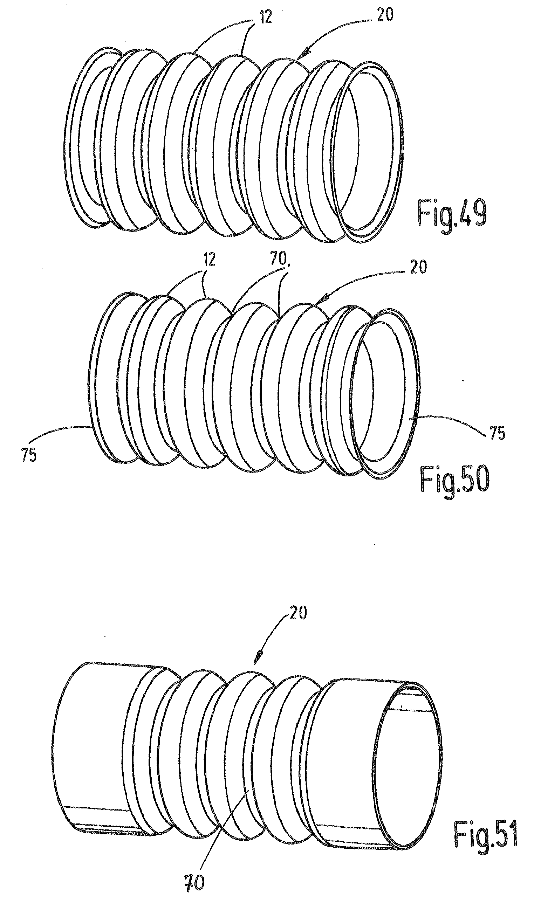

Nach der Vulkanisierung wird der Presswickel oder Pressfolie und die Konturringe 160 vor dem Beschnitt entfernt (Fig. 47). Der Wellenbalg 20 wird dann beschnitten (Fig. 48). Danach erfolgt die Entformung und der Wellenbalg 20 wird erhalten (Fig. 49). Der Wellenbalg 20 wird dann mit Stützringen 70, 160 und V-Flansch-Ringen konfektioniert (Fig. 50).

Fig. 51 zeigt den fertigen Wellenbalg 20, konfektioniert mit Stützringen 70.

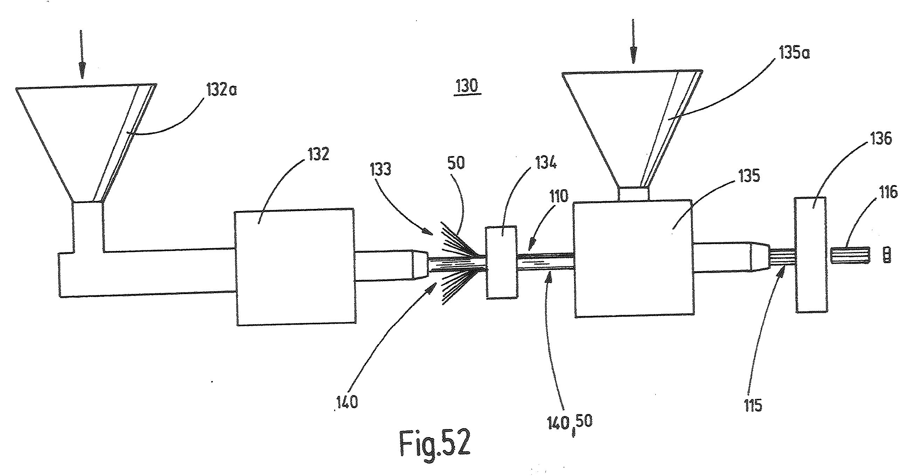

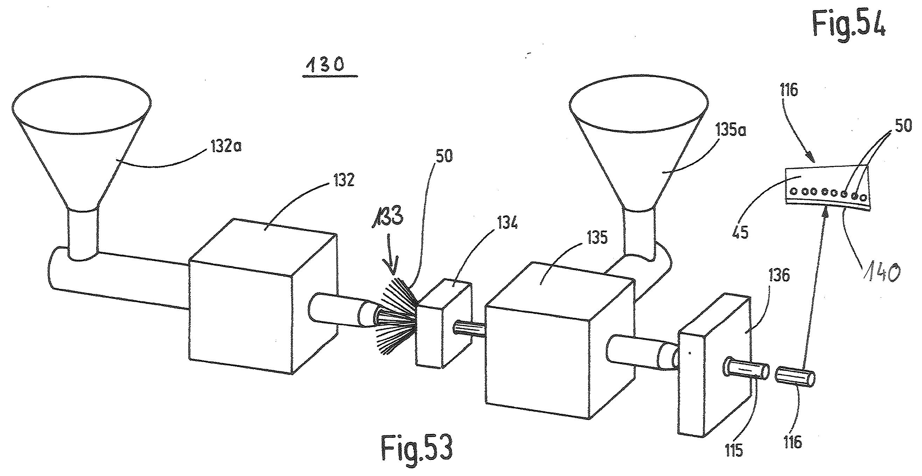

Ein weiteres Herstellungsverfahren für einen Wellenbalg 20 arbeitet durch Extrusion eines strang- und schlauchförmigen Rohlings 115 gemäß Fig. 52 und 53. Dieses Verfahren wird in einer Extrusionsanlage 130 durchgeführt. Die Extrusionsanlage 130 umfasst einen ersten Extruder 132, mit dem ein strangförmiger Innenliner 140 hergestellt wird. An den ersten Extruder 132 schließt sich eine Vorrichtung 133 für die Zuführung der Cord-Fäden 50, die in Längsrichtung zugeführt werden. Es schließt sich dann ein zweiter Extruder 135 an, über den das elastomere oder thermoplastische Material zugeführt wird, was zu einer Einbettung der Cord-Fäden in das Elastomer oder die Thermoplaste führt. Der so erhaltene strangförmige Endlos-Rohling 115 wird zum Ablängen für die Weiterverarbeitung einer Vorrichtung 136 zum Ablängen von einzelnen Rohlingabschnitten 116 zugeführt. Den beiden Extrudern 132, 135 sind Materialtrichter oder Einzüge 132a, 135a vorgeschaltet. Über diese Materialtrichter oder Einzüge werden die zu verarbeitenden elastomeren oder thermoplastischen Kunststoffe zugeführt. Die erhaltenen Rohlingabschnitte 116 werden dann mittels entsprechender Formwerkzeuge 100 bzw. mittels des zylindrischen Kernwerkzeuges 80 gemäß Fig. 10 oder mittels Profilrollen gemäß Fig. 42, 43 oder 44 oder mittels des Presswickel-Verfahrens gemäß Fig. 46 zu den einzelnen Wellenbälgen geformt.

Dieses Extrusionsverfahren hat den Vorteil, dass einerseits Elastomere oder thermoplastische Kunststoffe verarbeitet werden, bei denen mit Hilfe der Extruder später formbare / vulkanisierbare Schlauchrohlinge vorbereitet werden, in die gleichzeitig die Cord-Fäden 50 mit eingebracht werden. Fig. 54 zeigt einen Abschnitt des Rohlingsabschnittes 116 mit dem Innenliner 140, den Cord-Fäden 50 und der Einbettung der Cord-Fäden in ein Elastomer oder Thermoplast 45.

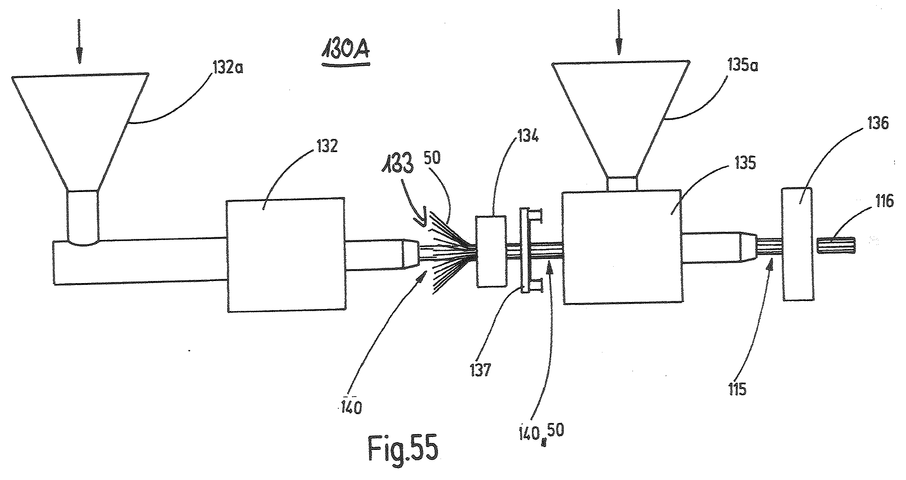

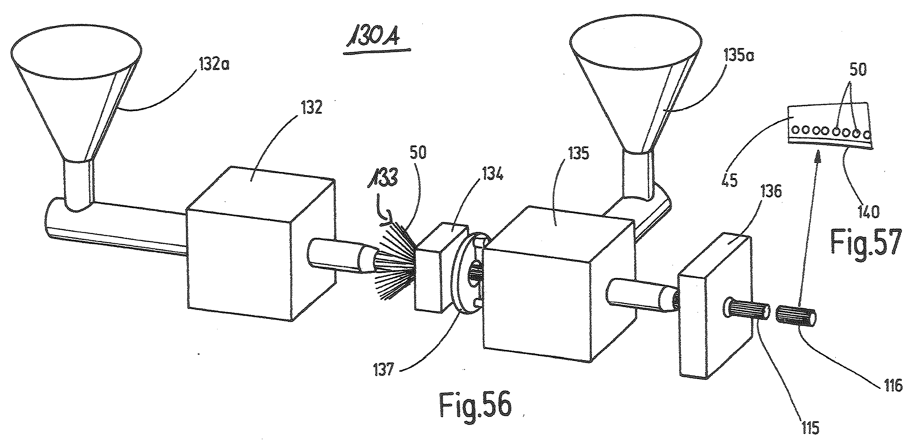

Die Extrusionsanlage 130A gemäß der Fig. 55 und 56 entspricht dem Aufbau der Extrusionsanlage 130 gemäß Fig. 52 und 53. Es werden in gleicher Weise Rohlingabschnitte 116 erhalten, die einen Innenliner 140, die Cord-Fäden 50 und deren Einbettung in einen Elastomer oder Thermoplast 45 umfassen.

Insofern ist die Extrusionsanlage 130A nach Fig. 55 und 56 erweitert, als zwischen der Vorrichtung 134 zur Fadenfixierung und dem zweiten Extruder 135 eine Vorrichtung 137 zur Zuführung eines Flyerfadens vorgesehen ist, so dass der Innenliner 140 mit Fixierfäden, die quer oder diagonal zu denen in Längsrichtung verlaufenden Cord-Fäden 50 helixartig laufen, versehen werden kann.

Fig. 57 zeigt einen Abschnitt des Rohlingabschnittes 116 mit dem Innenliner 140, den Cord-Fäden 50 und der Einbettung der Cord-Fäden 50 in ein Elastomer oder Thermoplast.

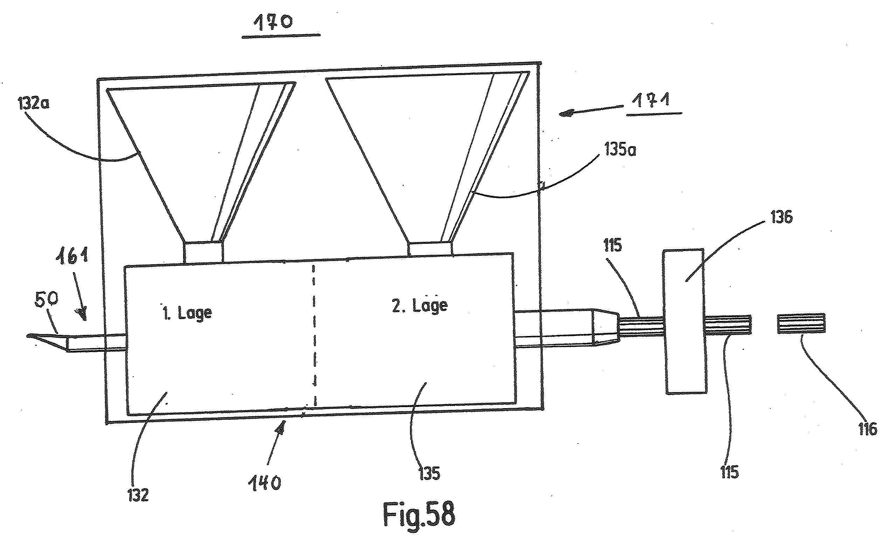

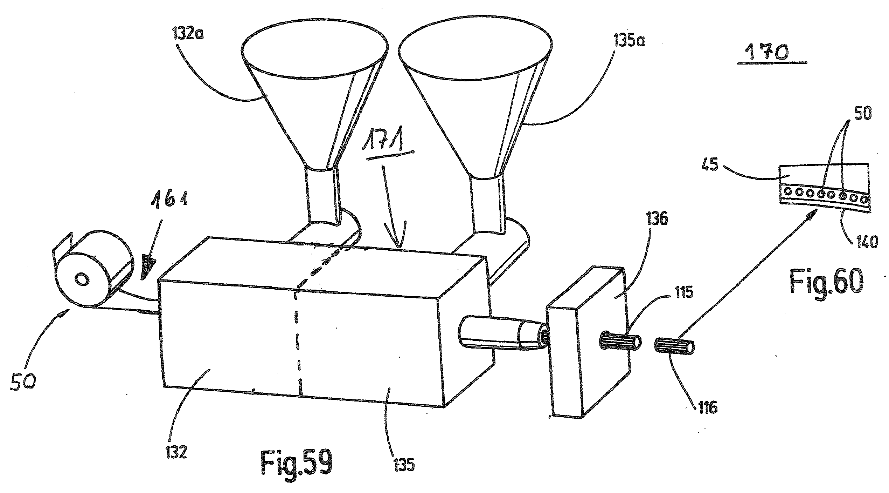

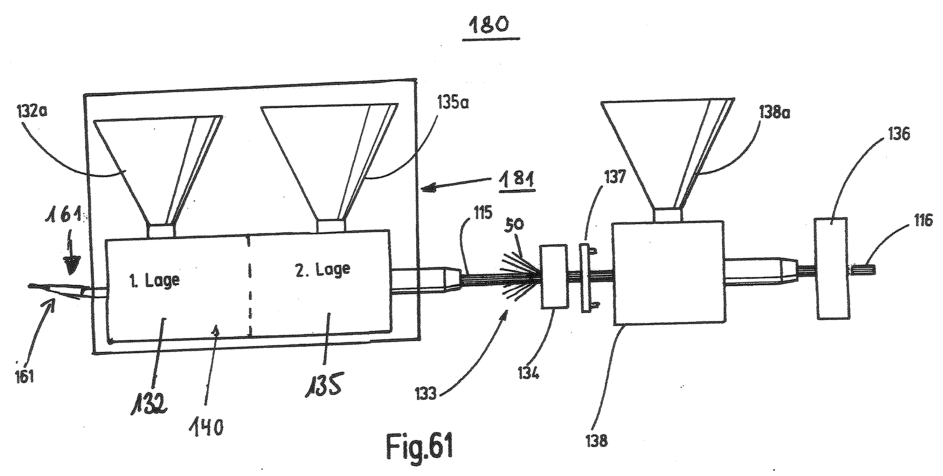

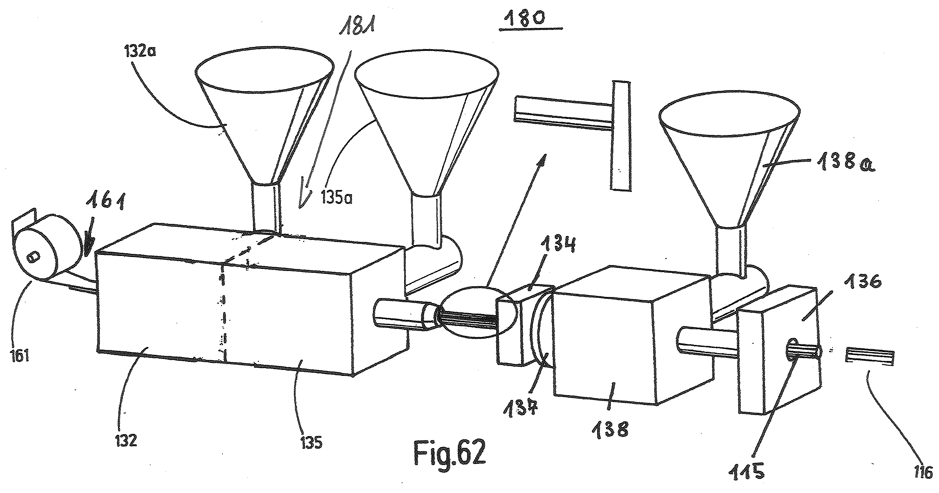

Ein weiteres Herstellungsverfahren für einen Wellenbalg 20 erfolgt durch Extrusion eines strang- und schlauchförmigen Rohlings 115 mit T-Co-Extrusionsanlagen 170, 180 gemäß Fig. 58 und 59 und gemäß Fig. 61 und 62. Jede T-Co-Extrusionsanlage 170, 180 weist als T-Co-Extruder 171 und 181 innerhalb eines Extruderkopfes je zwei Extrusionsmünder (ringförmige Düsen) 132 und 135 auf. Die beiden Extruderringdüsen 132 und 135 sind mit den Zuführungen 132A und 135A für elastomere oder thermoplastische Kunststoffe versehen.

Der Grundaufbau der beiden Extrusionsanlagen 170, 180 ist bei beiden Anlagen gleich.

Der ersten Extruderringdüse 132 der Extrusionsanlage 170 ist eine Vorrichtung 161 zum stirnseitigen Zuführen von Cord-Fäden 50 als Flachmaterial vorgeschaltet. In dem T-Co-Extruderkopf 171 wird oberhalb der ersten Extrusion der Innenseele das flachliegende Bahnmaterial der Cord-Fäden dieser Flachbahn über diese Innenseele 140 rund geformt und durch eine folgende Ringdüse 135 mit einer weiteren Lage Elastomer oder Thermoplast umspritzt.

In Fig. 61 wird der Rohling, bestehend aus einem Innenliner 140 mit einer darüber liegenden Lage Cord-Fäden 50 ausgebildet und dann wiederum mit einer Deckschicht überspritzt. Diese T-Co- Extrusionsanlage 170 kann entweder allein stehend oder gefolgt von einer weiteren Vorrichtung 133 zum Zuführung von Cordfäden 50, einer Vorrichtung 137 zum Anbringen von Flyerfäden, vorgeschaltet werden, um eine stärkere Wandung und ein oder mehrere Lagen der Festigkeitsträger in Form von längsliegenden Fäden, Fasern oder Cord-Fäden zu erhalten. Es kann ein weiterer Extruder 138 (Fig. 61 und 62) oder auch weitere dieser beschriebenen Anordnung folgen. Es folgt dann weiter eine Vorrichtung 136 zum Ablängen von Rohlingabschnitten 116. Vom Aufbau her sind die beiden T-Co-Extrusionsanlagen 170, 180 gleich ausgebildet. Die Extrusionsanlage 180 ist gegenüber der Extrusionsanlage 170 insofern erweitert, als eine Vorrichtung 137 zum Anbringen von Flyerfäden und ein weiterer Extruder 138, dem ein Materialtrichter/-einzug 138a zugeordnet ist, vorgesehen sind, über den Elastomer oder Thermoplast zugeführt werden, so dass ein Endlos-Rohling 115 mit zwei Lagen Cord-Fäden erhalten werden kann. Der Endlos-Rohling 115 wird dann anschließend zu einzelnen Rohlingsabschnitten 116 (Fig. 61) verarbeitet, aus denen dann die Wellenbälge 20 geformt werden.

Die erhaltenen Rohlingsabschnitte 116 werden mittels entsprechender Formwerkzeuge 100 bzw. mittels der zylindrischen Kernwerkzeuge 80 gemäß Fig. 10 oder mittels Profilrollen gemäß Fig. 42, 43 oder 44 oder mittels des Presswickel-verfahrens gemäß Fig. 46 zu den einzelnen Wellenbälgen 20 geformt.

Mit der T-Co-Extrusionsanlage 170 werden Rohlinge für die Herstellung von Wellenbälgen 20 mit einer Lage von Cord-Fäden 50 hergestellt. Die T-Co-Extrusionsanlage 180 ermöglicht die Herstellung von Rohlingen für die Herstellung von Wellenbälgen 20 mit zwei Lagen von Cord-Fäden. Bei einer entsprechenden Auslegung der T-Co-Extrusionsanlagen können auch Rohlinge mit mehr als zwei Lagen von Cord-Fäden hergestellt werden, wenn dickwandige Wellenbälge hergestellt werden sollen.

## Patentansprüche

1. Flexibler schlauchförmiger Formkörper (10) mit einer Wandfläche mit einem Wellenprofil, wie Wellenbalg (20), für Luftansaugung, Turboaufladung, Kühlwasser- und Ölkreisläufe und Klimatisierung zur Anwendung im Fahrzeugbau, Schiffsbau, Maschinenbau und Flugzeugbau,
wobei die umlaufende Wandfläche (11) des Formkörpers (10) aus mehreren Festigkeitsträgereinlagen (30; 30') besteht,
wobei jede Festigkeitsträgereinlage (30; 30') des Formkörpers (10) aus in ein vulkanisierbares Material, in ein Elastomer oder in ein Thermoplast eingebetteten, in Längsrichtung des Formkörpers (10) und parallel zueinander verlaufenden Fäden oder Fasern oder Cord-Fäden (50) mit einer hohen Reißfestigkeit, optional mit zusätzlichen, umlaufenden helixartig gewickelten Zusatzfäden als Druckträgerelement, und aus quer oder diagonal zu den in Längsrichtung verlaufenden Fäden oder Fasern oder Cord-Fäden (50) verlaufenden und die Fäden oder Fasern oder Cord-Fäden (50) in Stellung und in Abstand haltenden und bevorzugterweise in größeren Abständen angeordneten Fixierfäden (60) mit einer gegenüber der Stärke der Fäden (50) geringeren Stärke besteht, wobei die Festigkeitsträgereinlagen (30; 30') derart übereinanderliegend angeordnet sind, dass die in Längsrichtung des Formkörpers (10) verlaufenden Fäden oder Fasern oder Cord-Fäden (50) der jeweils obersten Festigkeitsträgereinlage (30) über den Fäden oder Fasern oder den Cord-Fäden (50) der jeweils darunter liegenden Festigkeitsträgereinlage (30') zu liegen kommen oder dass die in Längsrichtung des Formkörpers (10) verlaufenden Fäden oder Fasern oder Cord-Fäden (50) der jeweils obersten Festigkeitsträgereinlage (30) über den Fäden oder Fasern oder den Cord-Fäden (50) der jeweils darunter liegenden Festigkeitsträgereinlage (30') versetzt angeordnet sind, so dass die Fäden oder Fasern oder Cord-Fäden (50) der jeweils obersten Festigkeitsträgereinlage (30) oberhalb der Zwischenräume zwischen den Fäden oder Fasern oder Cord-Fäden (50) der jeweils darunter liegenden Festigkeitsträgereinlage (30') zu liegen kommen; wobei die Fixierfäden (60) nach Art von Kettfäden eines aus Schuss- und Kettfäden bestehenden Gewebes um und über die Fäden oder Fasern oder die Cord-Fäden (50) geführt sind und in das vulkanisierbare Material oder in das Elastomer oder in das Thermoplast (40) eingebettet sind, und wobei der Formkörper (10) ein Wellenprofil (12) mit talförmigen bzw. eingezogenen Formkörperabschnitten (14) und mit erhaben abgebildeten Formkörperabschnitten (15) aufweist, wobei in den talförmigen Formkörperabschnitten (14) Ringkörper (70, 120) aus einem metallischen Material oder aus einem eine große Härte aufweisenden Kunststoff zur Erhaltung der Wellenkontur unter Innendruck und zur Erhöhung der Druckfestigkeit angeordnet sind.

2. Flexibler schlauchförmiger Formkörper nach Anspruch 1, **dadurch gekennzeichnet, dass** das Bettungsmaterial (45) für die in Längsrichtung verlaufenden Fäden oder Fasern und für die Cord-Fäden (50) und für die Fixierfäden (60) aus einem formfesten, gummielastischen Elastomer besteht.

3. Flexibler schlauchförmiger Formkörper nach Anspruch 1, **dadurch gekennzeichnet, dass** das Bettungsmaterial (45) für die in Längsrichtung verlaufenden Fäden oder Fasern und für die Cord-Fäden (50) und für die Fixierfäden (60) aus einem Thermoplast, wie Polyethylen, Polypropylen, Polyvinylchlorid, Polystyrol, Polyamid usw., besteht.

4. Flexibler schlauchförmiger Formkörper nach einem der vorhergehenden Ansprüche 1 bis 3, **dadurch gekennzeichnet, dass** die in Längsrichtung verlaufenden Fäden oder Fasern oder Cord-Fäden (50) eine hohe Reißfestigkeit aufweisen und diese Fasern und Fäden aus monofilen, stapelfasrig gesponnenen, aus diesen auch gezwirnten, Fäden aus Thermoplasten, Kohle/Carbon, Keramik, Glas, Metall und Naturfasern, sowie Kombination diese Materialien (Hybride) bestehen.

5. Flexibler, schlauchförmiger Formkörper nach einem der vorhergehenden Ansprüche 1 bis 4, **dadurch gekennzeichnet, dass** die Innenwandfläche des Formkörpers (10) von einem Innenliner (140) gebildet ist, auf dem die in das Elastomer oder den Thermoplast (40) eingebetteten Festigkeitsträgereinlagen (30) mit den Cord-Fäden (50) und mit den Fixierfäden (60) angeordnet sind.

6. Verfahren zur Herstellung des flexiblen, schlauchförmigen Formkörpers (10) nach einem der vorhergehenden Ansprüche 1 bis 5,
umfassend folgende Schritte:
a) Herstellen eines Flächengebildes (90) durch Einbettung mehrerer übereinanderliegender Festigkeitsträgereinlagen (30, 30') aus in Längsrichtung zur Achse (82) eines zylindrischen Kernwerkzeuges (80) mit einem außenseitig aufweisenden Wellenprofil (83) parallel zueinander und in einem Abstand voneinander verlaufenden Fäden oder Fasern oder Cord-Fäden (50) mit einer hohen Reißfestigkeit, optional
mit zusätzlichen, umlaufenden helixartig gewickelten Zusatzfäden ,
und aus quer oder diagonal zu den in Längsrichtung verlaufenden Fäden oder Fasern oder Cord-Fäden (50) diese in Stellung haltenden Fixierfäden (60) in ein vulkanisierbares Material oder in ein Elastomer oder in ein Thermoplast (40);
b) Bildung einer Rolle (95) aus dem in Schritt a) hergestellten Flächengebilde (90);
c) Aufwickeln eines vom aufgerollten Flächengebilde (90) abgetrennten Abschnittes (96) auf ein außenwandseitig ein Wellenprofil (81) aufweisendes, zylindrisches oder hohlzylindrisches Kernwerkzeug (80);
d) Einwirken einer Pressbandage, Pressfolie oder Außendrucks oder des oberen/äußeren Werkzeuges (101) und des unteren/inneren Werkzeuges (102) eines Formwerkzeuges (100) mit einer Ober/Außenform (103) mit der Form des herzustellenden Formkörpers mit dem Wellenprofil (12), wobei sich die Formen
(103a, 104a) der Ober-/Außenform (103) und einer Unter-/Innenform (104) zur Wellenform des Formkörpers ergänzen, auf den auf dem zylindrischen Kernwerkzeug angeordneten Abschnitt (91) des Flächengebildes (90) zur Ausbildung des Wellenbalges (20);
gegebenenfalls
d1. Einwirken einer Pressbandage, Pressfolie, Überdrucks, herabfahrbarer Anpressrollen, oder auch Rundprofile, die vor dem Auffahren der Pressbandage, Pressfolie etc. aufgesteckt werden, um die Formgebung zu verbessern; und/oder
d2. Expansion durch Innenbedruckung des Formlings/Rohlings mittels Ballon oder durch direkte Luft oder Dampfeinblasung anstelle des Kernwerkzeugs an die Innenkontur des geschlossenen Ober-/Unterwerkzeugs;
e) Entfernen des zylindrischen Kernwerkzeuges (80) zur Freigabe des Wellenbalges (20);
f) Einsetzen von Ringkörpern (70, 120) aus einem metallischen Material in die im Wellenbalg ausgebildeten Wellentäler (14a).

## Claims

1. A flexible, hose-like moulded body (10) having a wall face with a corrugated profile, such as a bellows (20), for air intake, turbocharging, coolant and oil circuits and air conditioning, for use in automotive engineering, shipbuilding, mechanical engineering and aircraft construction,
wherein the circumferential wall face (11) of the moulded body (10) consists of a plurality of reinforcing plies (30; 30'),
wherein each reinforcing ply (30; 30') of the moulded body (10) consists of threads or fibres or cords (50), which are embedded in a vulcanisable material, elastomer or thermoplastic, and which run in the longitudinal direction of the moulded body (10) and parallel to each other and have a high tear strength and optionally additional, circumferential, helically wound threads as a pressure-carrying element, and of fixing threads (60), which run transversely or diagonally to the threads or fibres or cords (50) that run in the longitudinal direction, and which keep the threads or fibres or cords (50) in position and spaced apart, wherein the fixing threads (60) are preferably arranged at relatively large intervals and have a lower strength than the strength of the threads (50), wherein the reinforcing plies (30; 30') are arranged one on top of the other in such a manner that the threads or fibres or cords (50) of the in each case uppermost reinforcing ply (30) that run in the longitudinal direction of the moulded body (10) come to lie over the threads or fibres or cords (50) of the reinforcing ply (30') in each case therebeneath or that the threads or fibres or cords (50) of the in each case uppermost reinforcing ply (30) that run in the longitudinal direction of the moulded body (10) are arranged over the threads or fibres or cords (50) of the reinforcing ply (30') in each case therebeneath in an offset manner so that the threads or fibres or cords (50) of the in each case uppermost reinforcing ply (30) come to lie above the interstices between the threads or fibres or cords (50) of the reinforcing ply (30') in each case therebeneath; wherein the fixing threads (60) are guided around and over the threads or fibres or cords (50) in the manner of warp threads of a woven fabric consisting of weft and warp threads and are embedded into the vulcanisable material or elastomer or thermoplastic (40), and wherein the moulded body (10) has a corrugated profile (12) with trough-shaped or recessed moulded body sections (14) and with raised moulded body sections (15), wherein annular bodies (70, 120) consisting of a metallic material or a plastic of great hardness are arranged in the trough-shaped moulded body sections (14) to maintain the corrugated contour under internal pressure and to increase the compressive strength.

2. The flexible, hose-like moulded body according to Claim 1,
**characterised in that**
the embedding material (45) for the threads or fibres and cords (50) that run in the longitudinal direction and for the fixing threads (60) consists of a dimensionally stable, rubber-elastic elastomer.

3. The flexible, hose-like moulded body according to Claim 1,
**characterised in that**
the embedding material (45) for the threads or fibres and cords (50) that run in the longitudinal direction and for the fixing threads (60) consists of a thermoplastic, such as polyethylene, polypropylene, polyvinyl chloride, polystyrene, polyamide etc.

4. The flexible, hose-like moulded body according to any one of the preceding Claims 1 to 3,
**characterised in that**
the threads or fibres or cords (50) that run in the longitudinal direction have a high tear strength and said fibres and threads consist of monofilamentous threads that are spun to form staple fibres and also twined, and consist of thermoplastics, carbon, ceramics, glass, metal and natural fibres, as well as combinations of said materials (hybrids).

5. The flexible, hose-like moulded body according to any one of the preceding Claims 1 to 4,
**characterised in that**
the inner wall face of the moulded body (10) is formed by an inner liner (140), on which are arranged the reinforcing plies (30) that are embedded into the elastomer or thermoplastic (40) with the cords (50) and the fixing threads (60).

6. A method for producing the flexible, hose-like moulded body (10) according to any one of the preceding Claims 1 to 5, comprising the following steps:
a) producing a sheet material (90) by embedding in a vulcanisable material or elastomer or thermoplastic (40) a plurality of reinforcing plies (30, 30'), which lie one on top of the other and consist of threads or fibres or cords (50), which run in the longitudinal direction to the axis (82) of a cylindrical core die (80) having a corrugated profile (83) on the outside, parallel to each other and at a distance from each other and have a high tear strength, and optionally additional, circumferential, helically wound threads, and of fixing threads (60), which run transversely or diagonally to the threads or fibres or cords (50) that run in the longitudinal direction and keep the latter in position;
b) forming a roll (95) of the sheet material (90) produced in step a);
c) winding a section (96) cut from the rolled up sheet material (90) onto a cylindrical or hollow-cylindrical core die (80), which has a corrugated profile (81) on the outer wall thereof;
d) applying a compression bandage, compression film or external pressure or the upper/outer die (101) and the lower/inner die (102) of a moulding die (100) having an upper/outer mould (103) having the shape of the moulded body to be produced with the corrugated profile (12), wherein the shapes (103a, 104a) of the upper/outer mould (103) and of a lower/inner mould (104) complement each other to form the corrugated shape of the moulded body, to the section (91) of the sheet material (90) that is arranged on the cylindrical core die in order to form the bellows (20);
where necessary
d1. applying a compression bandage, compression film, overpressure, lowerable pressure rollers or else round profiles that are placed on before the compression bandage, compression film etc. is applied, in order to improve the shaping process; and/or
d2. expanding by application of internal pressure to the formed body/blank by means of a balloon or by directly blowing in air or steam instead of the core die against the inner contour of the closed upper/lower die;
e) removing the cylindrical core die (80) to release the bellows (20);
f) inserting annular bodies (70, 120) consisting of a metallic material into the troughs (14a) formed in the bellows.

## Revendications

1. Corps de formage flexible, en forme de tuyau (10), avec une surface de paroi avec un profil ondulé, tel un soufflet ondulé (20) pour aspiration d'air, suralimentation par turbosoufflante, circuits d'eau de refroidissement et d'huile et climatisation pour l'utilisation en construction automobile, construction navale, construction mécanique et construction aéronautique,
dans lequel la surface de paroi périphérique (11) du corps de formage (10) se compose de plusieurs garnitures de support de renforcement (30 ; 30'),
dans lequel chaque garniture de support de renforcement (30 ; 30') du corps de formage (10) se compose de fils ou de fibres ou de fils côtelés (50) s'étendant en direction longitudinale du corps de formage (10) et parallèlement entre eux, incorporés dans un matériau vulcanisable, dans un élastomère ou une matière thermoplastique, avec une grande résistance à la rupture, en option, avec des fils supplémentaires périphériques enroulés en hélice en tant qu'élément de support de pression, et des fils de fixation (60) s'étendant transversalement ou diagonalement aux fils ou fibres ou fils côtelés (50) s'étendant en direction longitudinale, et maintenant en position et à distance les fils ou fibres ou fils côtelés (50), et de préférence disposés à distances plus grandes avec une épaisseur inférieure à l'épaisseur des fils (50), dans lequel les garnitures de support de renforcement (30, 30') sont disposées de manière superposées d'une façon telle, que les fils ou fibres ou fils côtelés (50) s'étendant en direction longitudinale du corps de formage (10) de la garniture de support de renforcement (30) respectivement supérieure arrivent à reposer sur les fils ou fibres ou fils côtelés (50) de la garniture de support de renforcement (30') respectivement située en-dessous, ou que les fils ou fibres ou fils côtelés (50) s'étendant en direction longitudinale du corps de formage (10) de la garniture de support de renforcement (30) respectivement supérieure sont disposés de manière décalée sur les fils ou fibres ou les fils côtelés (50) de la garniture de support de renforcement (30') respectivement située en-dessous, de sorte que le fils ou fibres ou fils côtelés (50) de la garniture de support de renforcement (30) respectivement supérieure arrivent à reposer au-dessus des espaces intermédiaires entre les fils ou fibres ou fils côtelés (50) de la garniture de support de renforcement (30') respectivement située en-dessous ;
dans lequel les fils de fixation (60) sont guidés, à la manière de fils de chaîne d'un tissu composé de fils de trame et de chaîne, autour des fils ou fibres ou des fils côtelés (50), et par-dessus ceux-ci, et sont incorporés dans le matériau vulcanisable ou dans l'élastomère ou dans la matière thermoplastique (40), et dans lequel le corps de formage (10) présente un profil ondulé (12) avec des parties de corps de formage (14) en forme de vallées ou évidées et avec des parties de corps de formage (15) réalisées de manière convexe,
dans lequel, dans les partie de corps de formage (14) en forme de vallées, des corps annulaires (70, 120) en un matériau métallique ou en un plastique présentant une plus grande dureté sont disposés pour le maintien du contour ondulé sous pression interne et pour l'augmentation de la résistance à la pression.

2. Corps de formage flexible, en forme de tuyau, selon la revendication 1,
**caractérisé en ce que** le matériau d'incorporation (45) pour les fils ou fibres s'étendant en direction longitudinale et pour les fils côtelés (50) et pour le fils de fixation (60) se compose d'un élastomère indéformable élastique comme du caoutchouc.

3. Corps de formage flexible, en forme de tuyau, selon la revendication 1,
**caractérisé en ce que** le matériau d'incorporation (45) pour les fils ou fibres s'étendant en direction longitudinale et pour les fils côtelés (50) et pour le fils de fixation (60) se compose d'une matière thermoplastique telle du polyéthylène, du polypropylène, du poly(chlorure de vinyle), du polystyrène, du polyamide, etc.

4. Corps de formage flexible, en forme de tuyau, selon l'une des revendications 1 à 3 précédentes,
**caractérisé en ce que** les fils ou fibres ou fils côtelés (50) s'étendant en direction longitudinale présentent une résistance élevée à la rupture et **en ce que** ces fils et fibres se composent de fils monofilaires, filés de manière fibreuse discontinue, en étant également retordus à partir de ceux-ci, en matières thermoplastiques, lignite/carbone, céramique, verre, métal et fibres naturelles, ainsi que des combinaisons de ces matériaux (hybrides).

5. Corps de formage flexible, en forme de tuyau, selon l'une des revendications 1 à 4 précédentes,
**caractérisé en ce que** la surface de paroi intérieure du corps de formage (10) est formée par une feuille intérieure (140) sur laquelle sont disposées les garnitures de support de renforcement (30) incorporées dans l'élastomère ou la matière thermoplastique (40) avec les fils côtelés (50) et avec les fils de fixation (60).

6. Procédé pour la fabrication du corps de formage flexible, en forme de tuyau (10), selon l'une des revendications 1 à 5 précédentes,
comprenant les étapes suivantes :
a) la fabrication d'une structure plane (90) par incorporation de plusieurs garnitures de support de renforcement (30, 30') superposées à base de fils ou fibres ou fils côtelés (50) s'étendant en direction longitudinale à l'axe (82) d'un moule-noyau cylindrique (80) avec présentation d'un profil ondulé (83) à l'extérieur, parallèlement entre eux et à distance les uns des autres, avec une grande résistance à la rupture, en option
avec des fils supplémentaires additionnels périphériques, enroulés en hélice, et à base de fils de fixation (60) transversaux ou diagonaux aux fils ou fibres ou fils côtelés (50) s'étendant en direction longitudinale, maintenant ceux-ci en position, dans une matière vulcanisable ou un élastomère ou une matière thermoplastique (40) ;
b) la formation d'un rouleau (95) à partir de la structure plane (90) fabriquée à l'étape a) ;
c) l'enroulement d'une partie (96) coupée de la structure plane (90) enroulée sur un moule-noyau cylindrique ou cylindrique creux (80) présentant un profil ondulé (81) du côté de la paroi extérieure ;
d) faire agir un bandage de pression, une feuille de pressage ou une pression extérieure ou le moule supérieur/extérieur (101) et le moule inférieur/intérieur (102) d'un outil de formage (100) avec un moule supérieur/extérieur (103) avec la forme du corps de formage à fabriquer avec le profil ondulé (12), dans lequel les formes (103a, 104a) du moule supérieur/extérieur (103) et d'un moule inférieur/intérieur (104) se complètent pour donner la forme ondulée du corps de formage, sur la partie (91) de la structure plane (90) disposée sur le moule-noyau cylindrique, pour la formation du soufflet ondulé (20) ;
le cas échéant,
d1. faire agir un bandage de pression, une feuille de pressage, une surpression de rouleaux presseurs abaissables ou également de profilés ronds, lesquels sont montés avant l'avance du bandage de pression, de la feuille de pressage etc., pour améliorer le formage ; et/ou
d2. l'expansion de la pièce moulée/ébauche par mise en pression intérieure au moyen d'un ballon ou en insufflant directement de l'air ou de la vapeur, au lieu du moule-noyau, contre le contour intérieur du moule supérieur/inférieur fermé ;
e) le retrait du moule-noyau cylindrique (80) pour libérer le soufflet ondulé (20) ;
f) la mise en place de corps annulaires (70, 120) en un matériau métallique dans les creux d'ondulation (14a) formés dans le soufflet ondulé.
